# EUROPÄISCHE PATENTSCHRIFT

(11) **EP 3 452 275 B1**
(45) Veröffentlichungstag und Bekanntmachung des Hinweises auf die Patenterteilung: **03.07.2024**
(21) Anmeldenummer: 17721527.4
(22) Anmeldetag: 04.05.2017
(51) Int. Cl.: B30B 1/00, B30B 9/30, B64D 11/00

(54) **SYSTEM ZUM KOMPAKTIEREN VON ABFALL IN EINEM FAHRZEUG**
SYSTEM FOR COMPACTING WASTE IN A VEHICLE
SYSTÈME DE COMPACTAGE DE DÉCHETS DANS UN VÉHICULE

(30) Priorität: 04.05.2016 DE 102016108362
(43) Veröffentlichungstag der Anmeldung: 13.03.2019
(73) Patentinhaber: Airbus Operations GmbH, 21129 Hamburg (DE)
(72) Erfinder: REISS, Matthias, 21129 Hamburg (DE); LUTZER, Wilhelm, 21129 Hamburg (DE); KIEHNE, Oliver, 21129 Hamburg (DE); KEMPA, Michael, 21129 Hamburg (DE); SPILLE, Marc, 21129 Hamburg (DE)
(74) Vertreter: LKGLOBAL Lorenz & Kopf Patentanwalt Attorney at Law PartG mbB
(86) Internationale Anmeldenummer: PCT/EP2017/000554
(87) Internationale Veröffentlichungsnummer: WO 2017/190838

(56) Entgegenhaltungen:
- EP-A1- 2 949 459
- CN-Y- 201 300 544
- GB-A- 1 428 258
- US-A- 3 835 767
- US-A- 3 835 769
- US-A- 4 273 037
- US-A- 4 444 099
- US-A1- 2005 072 324

## Beschreibung

### TECHNISCHES GEBIET

Die Erfindung betrifft ein System zum Kompaktieren von Abfall, einen Trolley sowie ein entsprechendes Fahrzeug

### HINTERGRUND DER ERFINDUNG

Ein Trolley zum Sammeln von Abfällen wird in einem Fahrzeug, insbesondere einem Flugzeug, eingesetzt. An Bord von Fahrzeugen, die dem Transport von Passagieren dienen, werden oftmals Speisen und Getränke konsumiert, was zu Abfall führt. Als Abfall kann also fester und/oder flüssiger Abfall angesehen werden. Die Abfälle werden insbesondere an Bord von Passagierflugzeugen überwiegend von dem Kabinenpersonal eingesammelt. Nach Beendigung einer Reise mit dem Fahrzeug müssen die Abfälle entsorgt werden. Da die Entsorgung an beliebigen Reisezielen jeweils zu Entsorgungsgebühren führt, werden Abfälle häufig an Bord des Fahrzeugs gelagert und anschließend an einem Heimatflughafen entsorgt.

Insbesondere bei Fahrzeugen für kurze Reisestrecken sind die Kabinen der Fahrzeuge auf eine hohe Anzahl von Passagierplätzen ausgelegt. Die Fahrzeuge weisen deshalb nur eine überschaubare Kapazität für eine Lagerung von Speisen und Getränken sowie eine nur überschaubare Kapazität zur Lagerung von Abfällen auf. Abfall kann beispielsweise Pappbecher, kleine Kartons, Flaschen, Dosen und/oder Tüten aufweisen. Außerdem kann Abfall Flüssigkeiten aufweisen, wie beispielsweise Reste von einem Getränk in einer Dose oder Flasche. Wird derartiger Abfall mittels des Trolleys eingesammelt, so weist ein derartiger Abfall eine geringe Dichte auf.

Dies ist darauf zurückzuführen, dass beispielsweise Pappbecher, Kartons und/oder Dosen nach dem Einsammeln nicht kompaktiert sind, sondern weiterhin zumindest zu einem Teil Luftvolumen umfassen, der zu einem relativ hohen Volumenbedarf zum Einsammeln eines derartigen Abfalls führt. Um bei einem gleichen, zur Verfügung stehenden Raum mehr Abfall einsammeln zu können, sind aus dem Stand der Technik Abfallkompaktierungssysteme bekannt. Diese sind dazu ausgebildet, das Volumen des eingesammelten Abfalls mechanisch zu kompaktieren, um derartigen kompaktierten Abfall mit einem geringen Volumenbedarf lagern zu können.

Aus dem Dokument EP 2 949 459 A1 ist ein Abfallkompaktierungssystem bekannt. Das Abfallkompaktierungssystem umfasst einen Trolley mit einer innen angeordneten Kompaktierungshülle, die starre Seitenflächen aufweist, wobei die Kompaktierungshülle durch Absaugung von Luft aus einem Innenraum der Kompaktierungshülle kompaktierbar ist. Beim Absaugen der Luft bewegen sich die starren Seitenflächen der Kompaktierungshülle in Horizontalrichtung aufeinander zu, so dass eine in Vertikalrichtung längliche sowie in Horizontalrichtung schmale, kompaktierte Kompaktierungshülle mit darin verdichtetem Abfall entsteht.

Für die Kompaktierung von Abfall unter Verwendung der Kompaktierungshülle mit den starren Seitenflächen wurde jedoch festgestellt, dass die Luft aus dem Innenraum der Kompaktierungshülle mit einem besonders starken Unterdruck abgesaugt werden muss, um entsprechende Kräfte hervorzurufen, so dass sich die starren Seitenflächen in Horizontalrichtung aufeinander zubewegen und eine möglichst starke Kompaktierung erreicht wird. Reicht hingegen ein bereitgestelltes Vakuum nicht aus, so verringert sich ein entsprechender Kompaktierungsgrad, was zu einer weniger effektiven Kompaktierung des Abfalls führt.

US 3 835 769 A offenbart eine Kompaktierungsvorrichtung für Abfälle, in der ein luftdicht verschließbarer Behälter mit einem darin befindlichen Faltenbalg evakuierbar ist, so dass der Faltenbalg sich ausdehnt, um Abfälle in dem Behälter zu kompaktieren. Eine hierfür erforderliche Vorrichtung ist in dem Deckel des Behälters angeordnet.

### ZUSAMMENFASSUNG DER ERFINDUNG

Es ist eine Aufgabe der Erfindung, ein System zum besonders einfachen und zugleich effektiven Kompaktieren von Abfall bereitzustellen.

Die Aufgabe wird durch ein System zum Kompaktieren von Abfall mit den Merkmalen des unabhängigen Anspruchs 1 gelöst. Vorteilhafte Ausgestaltungen und bevorzugte Ausführungsformen sind in den zugehörigen Unteransprüchen und in der nachfolgenden Beschreibung wiedergegeben.

Es wird ein System zum Kompaktieren von Abfall vorgeschlagen. Das System weist einen Trolley zum Einsammeln von Abfall und ein Kabinenmonument für ein Fahrzeug auf. Der Trolley weist eine Kompaktierungsvorrichtung mit einem Deckel, der einen ersten Deckelkanal besitzt, auf. Der Trolley weist ein Trolleygehäuse mit einer oberseitigen Gehäuseöffnung auf. Außerdem weist der Trolley einen Behälter mit einer Behälteröffnung auf, wobei der Behälter in das Trolleygehäuse eingesetzt ist und/oder von dem Trolleygehäuse zumindest teilweise gebildet ist. Darüber hinaus umfasst der Trolley ein in dem Behälter angeordnetes, auswechselbares Abfallbehältnis mit einer oberseitigen Behältnisöffnung, wobei die Behältnisöffnung und die Behälteröffnung, sowie gegebenenfalls die Gehäuseöffnung, zum Sammeln von Abfall derart zueinander angeordnet sind, so dass Abfall in einen Behältnisinnenraum des Abfallbehältnises beförderbar ist. Außerdem weist die Kompaktierungsvorrichtung einen unterseitig an dem Deckel angeordneten Faltenbalg auf, der zumindest zwischen einer zusammengefalteten Stellung, in der ein Faltenbalginnenraum des Faltenbalgs ein erstes Volumen aufweist, und einer ausgefalteten Stellung, in der der Faltenbalginnenraum ein gegenüber dem ersten Volumen vergrößertes zweites Volumen aufweist, bewegbar ausgebildet ist. Der Deckel ist zumindest indirekt derart mit dem Behälter in Verbindung bringbar, dass der Faltenbalg einem Behälterinnenraum des Behälters zugewandt ist und der Deckel den Behälterinnenraum bis auf den ersten Deckelkanal luftdicht abschließt, so dass Fluid mittels des ersten Deckelkanals aus dem Behälterinnenraum absaugbar ist. Außerdem ist der Faltenbalg durch ein Absaugen von Fluid aus dem Behälterinnenraum mittels des ersten Deckelkanals in die ausgefaltete Stellung bewegbar, so dass der Faltenbalg derart weit in den Behälterinnenraum ragt und das Abfallbehältnis und/oder Abfall in dem Abfallbehältnis kompaktierbar ist.

Der Trolley ist vorzugsweise als verfahrbarer Wagen ausgestaltet. Der Trolley kann auch als Wagen, Rollwagen oder Transportwagen bezeichnet werden. Der Trolley kann gezogen oder geschoben werden. Dazu können Rollen unterseitig an dem Trolleygehäuse angeordnet sein, so dass der Trolley auf einem Fahrzeugboden, insbesondere einem Gang, in der Kabine des Fahrzeugs geschoben oder gezogen werden kann. Der Trolley kann also vorzugsweise als verfahrbarer Trolley ausgebildet sein.

Außerdem weist der Trolley einen Behälter auf. Der Behälter kann als separat handhabbarer Behälter ausgebildet sein. Dazu kann der Behälter in das Trolleygehäuse eingesetzt sein. Der Behälter weist eine Behälteröffnung auf, die vorzugsweise fluchtend mit der Gehäuseöffnung des Trolleygehäuses ist. Alternativ kann es vorgesehen sein, dass der Behälter von dem Trolleygehäuse selbst, zumindest teilweise selbst, gebildet ist. So können beispielsweise Innenwände und ein Boden des Trolleygehäuses derart ausgebildet sein, dass sie einen entsprechenden Behälter bilden. An dieser Stelle wird darauf hingewiesen, dass, wenn im Weiteren der Behälter erörtert wird, sich der Behälter auf die separate Variante des Behälters oder auf die Variante, nach der der Behälter zumindest teilweise von dem Trolleygehäuse gebildet ist, bezieht.

Außerdem ist ein Abfallbehältnis mit einer oberseitigen Behältnisöffnung vorgesehen. Das Abfallbehältnis kann beispielsweise ein Abfallbeutel oder ein Abfallkarton sein. Bevorzugt ist das Abfallbehältnis aus einem flüssigkeitsdichten Material ausgebildet. Das Material kann flüssigkeitsdichten Karton, Kunststoff oder ein metallisches Material, etwa Aluminium, beinhalten. Ist das Abfallbehältnis aus Karton hergestellt, kann dieser nach Befüllung und Komprimierung entsorgt und recycelt werden, was die Handgriffe für Bodenpersonal erleichtert. Entsprechend kann die Behältnisöffnung durch die Beutelöffnung des Abfallbeutels bzw. durch eine Kartonöffnung des Abfallkartons gebildet sein. Außerdem ist es denkbar, dass das Abfallbehältnis aus einer Kombination von einem Karton und einem Beutel gebildet ist. Das Abfallbehältnis ist in dem Behälter angeordnet. Dazu kann das Abfallbehältnis in dem Behälter eingesetzt oder eingelegt sein. Die Behältnisöffnung und die Behälteröffnung sowie die Gehäuseöffnung sind derart zueinander, insbesondere fluchtend, angeordnet, dass mit dem Trolley Abfall in dem Innenraum des Abfallbehältnisses sammelbar ist.

Außerdem weist der Trolley eine Kompaktierungsvorrichtung mit einem Deckel auf. Folglich kann die Kompaktierungsvorrichtung Teil des Trolleys oder dem Trolley zugeordnet sein.

Der Deckel kann als ein plattenförmiges, gewölbtes und/oder U-förmiges Element ausgebildet sein. Vorzugsweise ist der Deckel als starrer und/oder plattenförmiger Deckel ausgebildet. Der Deckel weist einen Deckelkanal auf. Der Deckelkanal ist vorzugsweise als ein Fluidkanal, insbesondere ein Luftkanal, ausgebildet. So kann der Deckelkanal beispielsweise als eine Bohrung von einer Oberseite zu einer Unterseite des Deckels ausgebildet sein. Die Kompaktierungsvorrichtung weist außerdem einen Faltenbalg auf. Der Faltenbalg ist an einer Unterseite des Deckels angeordnet. Der Faltenbalg ist zwischen einer zusammengefalteten Stellung und einer ausgefalteten Stellung bewegbar ausgebildet. Der Faltenbalg ist vorzugsweise fluiddicht mit dem Deckel verbunden. Außerdem ist es bevorzugt, dass der Faltenbalg eine fluiddichten Mantelwandung und einen fluiddichten Boden aufweist. Somit kann der Faltenbalg bis auf eine Bohrung in dem Deckel fluiddicht ausgebildet sein.

Zum Kompaktieren von Abfall in dem Behältnisinnenraum des Abfallbehältnisses wird der Deckel der Kompaktierungsvorrichtung mit dem Behälter in Verbindung gebracht. Dabei ist der Faltenbalg einem Behältnisinnenraum des Behälters zugewandt oder ragt in den Behältnisinnenraum des Behältnisses hinein. Der Deckel kann also auf einen öffnungsseitigen Rand des Behälters aufgesetzt werden, um mit diesem in Verbindung gebracht zu werden. Der Deckel schließt dabei den Behältnisinnenraum des Behälters bis auf den ersten Deckelkanal zumindest im Wesentlichen luftdicht ab. An der Unterseite des Deckels endet der erste Deckelkanal vorzugsweise radial außenseitig zu dem Faltenbalg, so dass Fluid, insbesondere Luft, mittels des ersten Deckelkanals aus dem Behältnisinnenraum absaugbar ist.

Wird nun Luft aus dem Behältnisinnenraum mittels des ersten Deckelkanals abgesaugt, so entsteht in dem Behältnisinnenraum ein Unterdruck, was wiederum entsprechende Zugkräfte auf den Faltenbalg hervorruft, was ein Entfalten des Faltenbalgs aus der zunächst zusammengefalteten Stellung in die ausgefaltete Stellung bewirkt. Dabei bewegt sich der Faltenbalg fortlaufend in den Behältnisinnenraum des Behälters hinein, wobei der Faltenbalg dabei auf das Abfallbehältnis und/oder auf den in dem Abfallbehältnis gesammelten Abfall stößt. Mit fortlaufender Absaugung von Luft aus dem Behältnisinnenraum entfaltet sich der Faltenbalg ebenfalls weiter, so dass der Abfall und/oder das Abfallbehältnis durch den Faltenbalg zusammengedrückt und damit kompaktiert wird.

Durch die entsprechende vertikale Abwärtsbewegung des Faltenbalgs kann eine besonders starke Kompaktierung des Abfalls bzw. des Abfallbehältnisses erreicht werden. Außerdem kann der Faltenbalg wiederholt zur Kompaktierung verwendet werden. So kann eine erneute Kompaktierung von Abfall in dem Abfallbehältnis erfolgen, nachdem weiterer Abfall nach der ersten Kompaktierung eingesammelt wurde. Weiterhin ist es möglich, dass das Abfallbehältnis nach einer Kompaktierung ausgetauscht wird. Mit dem neuen Abfallbehältnis kann sodami Abfall eingesammelt werden. Auch in diesem Fall kann die Kompaktierung von Abfall in dem Abfallbehältnis mit dem Faltenbalg erfolgen. Somit ist es möglich, dass das Abfallbehältnis als ein Einweg- oder Mehrweg-Abfallbehältnis ausgestaltet ist.

Ein weiterer Vorteil ist darin zu sehen, dass das Fluid, insbesondere die Luft, aus dem Behältnisinnenraum abgesaugt wird, um den Faltenbalg von der zusammengefalteten Stellung in die ausgefaltete Stellung zu bewegen. Gleichzeitig bietet das Absaugen der Luft aus dem Behältnisinnenraum den Vorteil, dass beim Kompaktieren keine unangenehmen Gerüche in die Umgebung austreten. Vielmehr wird die gegebenenfalls unangenehm riechende Luft aus dem Behältnisinnenraum zur Entfaltung des Faltenbalgs abgesaugt und an einen von der Passagierkabine getrennten Bereich geleitet. Somit kann das Absaugen der Luft einen doppelten Effekt hervorrufen, nämlich das Entfalten des Faltenbalgs und zugleich die geruchssichere Abführung von Luft aus dem Behältnisinnenraum.

In einem nicht beanspruchten Beispiel, bei dem die Kompaktierungsvorrichtung keinen Teil des Trolleys bildet und/oder diesem nicht zugeordnet ist, sondern dem Kabinenmonument, ist es vorgesehen, dass das Kabinenmonument derart ausgebildet ist, um die Kompaktierungsvorrichtung, insbesondere in Vertikalrichtung, zu verfahren. Dabei ist es bevorzugt vorgesehen, dass insbesondere der Deckel und der daran angeordnete Faltenbalg von dem Kabinenmonument verfahrbar ist. Dadurch kann der Deckel mit dem Faltenbalg in Richtung des Trolleys, und zwar vorzugsweise in Richtung des Behälters des Trolleys, verfahren werden. Wird der Behälter von dem Trolleygehäuse, insbesondere zumindest teilweise, gebildet, so kann es vorgesehen sein, dass der Deckel mit dem Faltenbalg in Richtung des Trolleygehäuses, und besonders bevorzugt in Richtung der Gehäuseöffnung des Trolleygehäuses, verfahrbar ist. Durch das Verfahren kann der Deckel mit dem Behälter, bzw. mit dem Trolleygehäuse, in Verbindung gebracht werden, so dass der Deckel den Behälterinnenraum, bzw. den Trolleygehäuseinnenraum, bis auf den ersten Deckelkanal luftdicht abschließt, so dass Fluid mittels des ersten Deckelkanals aus dem Behälterinnenraum, bzw. dem Trolleygehäuseinnenraum, absaugbar ist. Mit Fluid ist vorzugsweise Gas, Luft und/oder Flüssigkeit gemeint.

In einem nicht beanspruchten Beispiel, bei dem die Kompaktierungsvorrichtung ein Teil des Kabinenmonuments ist, bietet das System ebenso den Vorteil, dass Abfall mittels des Trolleys eingesammelt werden kann. Ist dies erfolgt, kann der Trolley in den Aufnahmeraum geschoben werden, so dass die Kompaktierungsvorrichtung des Kabinenmonuments oberhalb des Trolleys angeordnet ist. Daraufhin kann der Deckel zusammen mit dem Faltenbalg in Richtung des Trolleys verfahren werden, so dass der Deckel den Behälterinnenraum, bzw. den Trolleygehäuseinnenraum, bis auf den ersten Deckelkanal fluiddicht abschließt. Das anschließende Absaugen von Fluid, insbesondere Luft, aus dem Behälterinnenraum, bzw. Trolleygehäuseinnenraum bewirkt, dass der Faltenbalg aus der zusammengefalteten Stellung in die ausgefaltete Stellung bewegt wird, so dass der Faltenbalg das Abfallbehältnis und/oder Abfall in dem Abfallbehältnis kompaktiert. Ist dies erfolgt, kann der Faltenbalg aus der ausgefalteten Stellung zurück in die zusammengefaltete Stellung bewegt werden, um dabei oder danach den Deckel mit dem Faltenbalg wieder zurück in Richtung des Kabinenmonuments zu verfaliren, so dass der Trolley wieder aus dem Aufnahmeraum herausgezogen werden kann. Daraufhin kann ein weiteres Einsammeln von Abfall mittels des Trolleys erfolgen. Zuvor ist es möglich, dass das Abfallbehältnis aus dem Trolley durch ein neues Abfallbehältnis ausgewechselt wird. Das System bietet in dieser Konstellation deshalb den weiteren Vorteil, dass der Trolley frei von der Kompaktierungs¬vorrichtung ausgestaltet sein kann. Somit kann der Trolley ein geringeres Gewicht aufweisen und/oder geringere Ausmaße haben. Dies erleichtert die Herstellung und die Handhabung des Trolleys.

Es kann vorteilhaft sein, den Behälter mit Führungsschienen auszustatten, in denen das Abfallbehältnis halterbar ist. Das auswechselbare Abfallbehältnis kann etwa in eine Führungsschiene an der Oberseite des Trolleys eingeführt werden. Bevorzugt sind die Führungsschienen derart ausgestaltet, dass sie eine leichte Aufweitung der Behältnisöffnung bewirken, beispielsweise durch geeignete Anordnung von Fasen oder das Vorsehen von Neigungen der Führungsschienen. Dadurch kann verhindert werden, dass der Faltenbalg beim Komprimieren auf eine an der Behältnisöffnung liegenden Kante des Abfallbehältnisses stößt. Die Führungsschienen könnten weiterhin bevorzugt mit der Wandung des Abfallbehältnisses abschließen, damit sich der Faltenbalg bei einer nach zum Deckel gerichteten Bewegung nicht an den Führungsschienen verhakt.

Die Führungsschienen können mehrere Segmente umfassen, etwa ein vorderes Segment, ein hinteres Segment und seitliche Segmente. Diese können an einer vorderen Tür, einer hinteren Tür und Seitenflächen des Trolleys bzw. des Behälters angeordnet sein oder einen Teil davon ausbilden.

Eine vorteilhafte Ausgestaltung zeichnet sich dadurch aus, dass sich der erste Deckelkanal von einer ersten Öffnung an einer Deckeloberseite des Deckels zu einer zweiten Öffnung an einer Deckelunterseite des Deckels erstreckt, wobei die zweite Öffnung des ersten Deckelkanals radial außenseitig zu dem Faltenbalg angeordnet ist. Dabei kann der erste Deckelkanal durch eine Bohrung von der Deckeloberseite zu der Deckelunterseite ausgebildet sein. Der erste Deckelkanal kann sich dabei in Axialrichtung oder schräg dazu durch den Deckel erstrecken. Indem die zweite Öffnung des ersten Deckelkanals radial außenseitig zu dem Faltenbalg angeordnet ist, kann Fluid, insbesondere Luft, aus dem Behältnisinnenraum des Behälters abgesaugt werden. Der erste Deckelkanal ist deshalb nicht in unmittelbarer Fluidverbindung mit dem Faltenbalginnenraum.

Gemäß einer weiteren vorteilhaften Ausgestaltung ist die Kompaktierungsvorrichtung, und insbesondere der Deckel der Kompaktierungsvorrichtung, drehbar gelagert an dem Trolleygehäuse und/oder dem Behälter befestigt. Somit kann die Kompaktierungsvorrichtung bzw. der Deckel der Kompaktierungsvorrichtung geschwenkt werden, um einerseits die Behälteröffnung freizugeben, um Abfall in dem Abfallbehältnis einzusammeln, und andererseits, um den Deckel in Verbindung mit dem Behälter, insbesondere dem öffnungsseitigen Rand des Behälters, in Verbindung zu bringen, so dass der Behälterinnenraum bis auf den ersten Deckelkanal luftdicht abgeschlossen wird.

Gemäß einer weiteren vorteilhaften Ausgestaltung ist es vorgesehen, dass die Kompaktierungsvorrichtung, und insbesondere der zugehörige Deckel, abnehmbar ausgebildet ist und/oder lösbar an dem Trolleygehäuse befestigt ist. Dies bietet den Vorteil, dass die Kompaktierungsvorrichtung temporär von dem Trolley getrennt und an einer anderen Stelle gelagert werden kann, so dass der Trolley sodann zum Sammeln von Abfall verwendet werden kann. In diesem Fall kann der Trolley kleinere Umfangsmaße und/oder ein geringeres Gewicht aufweisen, was ein Schieben und/oder Ziehen des Trolleys durch einen Kabinengang des Fahrzeugs erleichtert, um hierbei Abfall in dem Abfallbehältnis einzusammeln. Um nach dem Einsammeln von Abfall eine Kompaktierung des Abfalls vorzunehmen, kann die Kompaktierungsvorrichtung wieder an dem Trolleygehäuse befestigt werden, so dass daraufhin die gewünschte Kompaktierung durch das Entfalten des Faltenbalgs erfolgen kann. Anschließend kann die Kompaktierungsvorrichtung wieder abgenommen werden, um beispielsweise das Abfallbehältnis mit dem kompaktierten Abfall aus dem Trolleygehäuse zu entnehmen und durch ein neues Abfallbehältnis zu ersetzen.

Eine weitere vorteilhafte Ausgestaltung zeichnet sich dadurch aus, dass der Deckel und ein behälteröffnungsseitiger Rand des Behälters derart ausgebildet sind, dass eine luftdichte Dichtung entsteht, wenn der Deckel auf den behälteröffnungsseitigen Rand des Behälters aufgesetzt wird, um den Deckel mit dem Behälter in Verbindung zu bringen. Dazu kann an der Unterseite des Deckels ein umlaufendes Dichtelement, wie beispielsweise ein umlaufendes Dichtgummi, angeordnet sein, das bzw. die auf den behälteröffnungsseitigen Rand des Behälters trifft, wenn der Deckel auf den Rand des Behälters aufgesetzt wird. Alternativ oder ergänzend kann an dem behälteröffnungsseitigen Rand des Behälters ein umlaufendes Dichtelement, wie beispielsweise eine umlaufende Gummidichtung, angeordnet sein, so dass der Deckel auf die an dem Rand des Behälters angeordnete Dichtung trifft, wenn der Deckel auf den Rand des Behälters gesetzt wird. In beiden Fällen kann eine besonders luftdichte Dichtung entstehen, die verhindert, dass beim unangenehme Luftabsauggeräusche beim Kompaktieren entstehen.

Eine weitere vorteilhafte Ausgestaltung zeichnet sich dadurch aus, dass eine von dem Deckel abgewandte, erste stirnseitige Wandung des Faltenbalgs starr ausgebildet ist. Die erste stirnseitige Wandung des Faltenbalgs kann einen Boden des Faltenbalgs bilden. Mit der ersten stirnseitigen Wandung bzw. dem Boden kommt der Faltenbalg mit dem Abfall und/oder dem Abfallbehältnis in Kontakt, um den Abfall zu kompaktieren. Indem die erste stirnseitige Wandung des Faltenbalgs starr ausgebildet ist, kann effektiv verhindert werden, dass spitze Abfallgegenstände aus dem Abfall eine Beschädigung oder sogar eine Zerstörung der ersten stirnseitigen Wandung des Faltenbalgs hervorrufen können. Darüber hinaus bietet die starre Ausgestaltung der ersten stirnseitigen Wandung den positiven Vorteil, dass ein durch das Absaugen der Luft aus dem Behälterinnenraum hervorgerufenes Vakuum, das auf die erste stirnseitige Wandung des Faltenbalgs wirkt, eine erhöhte Kraft hervorruft wird, die in einer gemeinsamen Richtung zu dem Abfallbehältnis wirkt. Damit kann eine besonders starke Kompaktierung des Abfalls erreicht werden.

In einem Beispiel erstreckt sich eine Mantelwandung des Faltenbalgs von der ersten stirnseitigen Wandung bis zu der Unterseite des Deckels. Die Mantelwandung kann umlaufende Faltlinien aufweisen, an denen jeweils eine Faltung erfolgen kann, um den Faltenbalg zwischen der zusammengefalteten Stellung und der ausgefalteten Stellung, bzw. umgekehrt, bewegen zu können. Eine zu der ersten stirnseitigen Wandung des Faltenbalgs gegenüberliegende zweite, stirnseitige Wandung des Faltenbalgs kann zumindest teilweise von dem Deckel ausgebildet sein. Alternativ oder ergänzend kann die zweite stirnseitige Wandung des Faltenbalgs von diesem selbst ausgebildet sein.

Eine weitere vorteilhafte Ausgestaltung zeichnet sich dadurch aus, dass eine Verstärkungsplatte an der ersten stirnseitigen Wandung des Faltenbalgs angeordnet und/oder ausgebildet ist, um den Faltenbalg an der ersten stirnseitigen Wandung starr auszubilden. Insbesondere kann eine separate Verstärkungsplatte mit der ersten stirnseitigen Wandung, insbesondere stoffschlüssig, verbunden sein und/oder in die erste stirnseitige Wandung integriert sein.

Der Deckel weist einen in Fluidverbindung mit dem Faltenbalginnenraum ausgebildeten, zweiten Deckelkanal auf. Dabei ist es bevorzugt vorgesehen, dass die erste stirnseitige Wandung des Faltenbalgs, die Mantelwandung des Faltenbalgs und der Deckel fluiddicht, insbesondere zueinander, ausgebildet sind, so dass ein bis auf den ersten Deckelkanal fluiddichter Faltenbalginnenraum gebildet ist. Der zweite Deckelkanal kann als Belüftungskanal für den Faltenbalginnenraum dienen. Wenn beispielsweise Luft aus dem Behälterinnenraum abgesaugt wird, so dass sich der Faltenbalg aus der zusammengefalteten Stellung in die ausgefaltete Stellung bewegt, so kann Luft durch den zweiten Deckelkanal in den Faltenbalginnenraum strömen, um diese Bewegung mit einem möglichst geringen Widerstand zu ermöglichen. Der zweite Deckelkanal kann also dazu ausgebildet sein, um eine Fluidverbindung zwischen dem Faltenbalginnenraum und einer Umgebungsluft herzustellen. Vorzugsweise erstreckt sich der zweite Deckelkanal in Axialrichtung oder schräg dazu durch den Deckel. Der zweite Deckelkanal kann deshalb nach Art einer Bohrung ausgebildet sein. Vorzugsweise erstreckt sich der zweite Deckelkanal von einer Oberseite des Deckels zu einer Unterseite des Deckels, wobei die unterseitige Öffnung des zweiten Deckelkanals zu dem Faltenbalginnenraum führt. An dieser Stelle sei erwähnt, dass der zweite Deckelkanal getrennt von dem ersten Deckelkanal ausgebildet ist. Somit lässt sich die Bewegung des Faltenbalgs zwischen der eingefalteten Stellung und der
ausgefalteten Stellung in der Art steuern, dass Luft durch den ersten Deckelkanal für eine erste Bewegungsrichtung und Luft durch den zweiten Deckelkanal für eine entgegengesetzte, zweite Bewegungsrichtung abgesaugt wird.

Eine weitere vorteilhafte Ausgestaltung zeichnet sich dadurch aus, dass der Behälterinnenraum durch eine Trennwand in eine Flüssigkeitskammer und eine Feststoffkammer, in der das Abfallbehältnis angeordnet ist, unterteilt ist, die sich jeweils bis zu der Behälteröffnung erstrecken, so dass durch einen Flüssigkeitskammeröffnungsbereich der Behälteröffnung Flüssigkeit in die Flüssigkeitskammer beförderbar ist und dass durch einen Feststoffkammeröffnungsbereich der Behälteröffnung Feststoff in die Feststoffkammer bzw. das Abfallbehältnis beförderbar ist. Außerdem ist es bevorzugt vorgesehen, dass die Trennwand eine Ausnehmung in einem behälteröffnungsseitigen Endabschnitt aufweist, durch die Gas, insbesondere Luft, aus der Feststoffkammer in die Flüssigkeitskammer strömen kann. Weiterhin weist der Behälter eine Absaugleitung auf, die sich von einer behälteröffnungsseitigen, ersten Leitungsöffhung bis zu einer zweiten Leitungsöffnung in einem bodenseitigen Bereich der Flüssigkeitskammer erstreckt, wobei die erste Leitungsöffnung der Absaugleitung und die zweite Öffnung des ersten Deckelkanals derart angeordnet sind, dass die zweite Öffnung des ersten Deckelkanals fluiddicht auf der ersten Leitungsöffnung zumindest indirekt aufliegt, wenn der Deckel mit dem Behälter in Verbindung gebracht ist, so dass eine Fluidverbindung zwischen dem ersten Deckelkanal und der Absaugleitung entsteht. Die zuvor erläuterte Ausgestaltung des Trolleys erlaubt die getrennte Einsammlung von flüssigem Abfall und festem Abfall. So können beispielsweise Flüssigkeitsreste aus einer Flasche oder einer Dose in die Flüssigkeitskammer befördert werden. Die Dose als solches oder andere feste Abfälle können in das Abfallbehältnis befördert werden. Die Trennwand verhindert dabei eine Durchmischung der zuvor genannten Abfälle. Nachdem Abfall mittels des Trolleys eingesammelt ist, wird der Deckel der Kompaktierungsvorrichtung derart mit dem Behälter in Verbindung gebracht, dass der Deckel den Behälterinnenraum bis auf den ersten Deckelkanal fluiddicht abschließt. An der Unterseite des Deckels endet der Deckelkanal mit der zugehörigen zweiten Öffnung. Diese ist dabei gegenüberliegend zu der ersten Leitungsöffnung der Absaugleitung angeordnet.

Weiterhin ist die Anordnung der zweiten Öffnung des ersten Deckelkanals und der ersten Leitungsöffnung der Absaugleitung derart ausgebildet, dass eine fluiddichte Dichtung zwischen den genannten Öffnungen entsteht, wenn der Deckel mit dem Behälter in Verbindung gebracht wird. Dabei kann die zweite Öffnung des ersten Deckelkanals unmittelbar auf der ersten Leitungsöffnung der Absaugleitung aufliegen. Alternativ kann es vorgesehen sein, dass an der zweiten Öffnung des ersten Deckelkanals und/oder an der ersten Leitungsöffnung der Absaugleitung ein umlaufendes, insbesondere ringförmiges, Dichtelement, wie eine Gummidichtung, angeordnet ist. Damit kann eine besonders fluiddichte Dichtung ausgebildet werden, wenn der Deckel auf dem Behälter aufgesetzt wird. Durch die entsprechende Fluidverbindung zwischen dem ersten Deckelkanal und der Absaugleitung wird gewährleistet, dass zunächst Flüssigkeit aus der Flüssigkeitskammer abgesaugt wird. Die Flüssigkeit strömt dabei durch die zweite Leitungsöffnung im bodenseitigen Bereich der Flüssigkeitskammer in die Absaugleitung und anschließen durch den ersten Deckelkanal. Daraufhin kann die abgesaugte Flüssigkeit in einem dafür vorgesehenen Behälter gesammelt werden. Ist die Flüssigkeit aus der Flüssigkeitskammer zumindest im Wesentlichen abgesaugt, erfolgt ein Absaugen von Luft aus der Flüssigkeitskammer. Die Flüssigkeitskammer ist durch die Ausnehmung in der Trennwand mit der Feststoffkammer verbunden. Somit wird durch das Absaugen von Luft aus der Flüssigkeitskammer auch Luft aus der Feststoffkammer abgesaugt. Sowohl beim Absaugen von Flüssigkeit aus der Flüssigkeitskammer als auch bei dem zuvor erläuterten, anschließenden Absaugen von Luft entsteht ein Vakuum in dem Behälterinnenraum, was dazu führt, dass der Faltenbalg aus der zusammengefalteten Stellung in die ausgefaltete Stellung bewegt wird, um die gewünschte Kompaktierung des Abfalls bzw. des Abfallbehältnisses zu erreichen. Diese Ausgestaltung des Trolleys bietet den Vorteil, dass der erste Deckelkanal sowohl dazu verwendet werden kann, um Flüssigkeit aus der Flüssigkeitskammer abzusaugen und um eine Kompaktierung des Feststoffabfalls in dem Abfallbehältnis zu erreichen.

In einer weiter vorteilhaften Ausführungsform weist der Deckel ein durch eine Wartungsklappe luftdicht verschließbare Wartungsöffnung auf. Dadurch können, beispielsweise im Falle einer Fehlfunktion der Kompaktierungsvorrichtung, die betreffenden Komponenten der Kompaktierungsvorrichtung gewartet werden. Beispielhaft kann eine stirnseitige Wandung des Faltenbalgs auf einer Innenseite, d.h. dem Deckel zugewandt, einen Griff zum Ziehen der stirnseitigen Wandung zu dem Deckel aufweisen.

Es kann ferner vorteilhaft sein, eine Rückholvorrichtung zu integrieren, mit der die stirnseitige Wandung manuell wieder in eine obere Position, d.h. zum Deckel gerichtet, gebracht werden kann. Die Rückholvorrichtung kann etwa einen Seilzug oder ähnliche Mittel umfassen.

Die Kompaktierungsvorrichtung kann weiterhin eine Haltevorrichtung aufweisen, mit dem die stirnseitige Wandung des Faltenbags in Verbindung gebracht werden kann, um den Verbleib der stirnseitigen Wandung in der oberen Position zu ermöglichen. Es bieten sich hier beispielsweise magnetische oder mechanische Halte- bzw. Schnappvorrichtungen an. Die stirnseitige Wandung kann sich bei Aufbringen eines ausreichenden Unterdrucks durch die von dem Deckel abgewandte Kraft aus dieser Halterung lösen. Es kann sich anbieten, bei Realisierung der magnetischen Haltevorrichtung einen Magneten mit einer Haltekraft von bis zu etwa 500 N vorzusehen, der an einer Oberseite des Trolleys, etwa deckelinnenseitig, angeordnet ist. Dies kann auch eine Einbauposition an der vorangehend erwähnten Wartungsklappe umfassen. Zum Hervorrufen einer Magnetwirkung kann die stirnseitige Wandung mit einer magnetischen Halteplatte als Gegenstück zu dem Magneten ausgestattet werden. Es könnte weiter vorteilhaft sein, die Einbauposition des Magneten über eine höheneinstellbare Halterung, beispielsweise eine Gewindestange mit einer Kontermutter, zu bestimmen. Bei Realisierung der mechanischen Schnappvorrichtung kann sich anbieten, eine Kugelschnappvorrichtung zu verwenden. Diese kann eine federbasierte Schnappvorrichtung umfassen, die eine Kugel oder ein ähnliches Objekt lösbar halten kann. Eine entsprechende Federkraft ließe sich dann über eine Einstellvorrichtung, etwa eine Schraube, einstellen.

Wie vorangehend erwähnt erlaubt der erste Deckelkanal das Absaugen von Luft aus dem Behältnisinnenraum, während der zweite Deckelkanal das Einströmen von Luft in den Faltenbalginnenraum durch Fluidverbindung mit der Umgebungsluft ermöglicht. Um zu verhindern, dass der erste oder der zweite Deckelkanal verschlossen oder blockiert wird, können entsprechende Öffnungen zu dem Behältnisinnenraum oder den Faltenbag mit einem Gitter, einem Sieb, einer Abdeckung mit mehreren Durchgangslöchern oder ähnlichem versehen werden. Es könnte sich beispielsweise anbieten, eine Abdeckung ähnlich einer Hutschiene mit verteilten Öffnungen, die zu mehreren Seiten gerichtet sind, zu verwenden. Bei einer solchen Maßnahme an dem ersten Deckelkanal kann zusätzlich verhindert werden, dass im Falle eines Brandes innerhalb des Behältnisses Flammen in die an den ersten Deckelkanal anschließende Leitung schlagen können. Statt der Verwendung eines einzelnen zweiten Deckelkanals oder einer einzelnen Öffnung von den Faltenbalginnenraum zur Umgebung, können auch mehrere, über den Deckel verteilte Öffnungen vorgesehen werden.

Zum Verhindern des Eintretens von Flüssigkeiten oder Kleinteile in eine an den ersten Deckelkanal anschließende Leitung, die die stromabwärts liegende Ventiltechnik beeinträchtigen könnten, kann zusätzlich ein Filter und/oder ein Flüssigkeitsabscheider sinnvoll sein. Bevorzugt sollten der Filter und/oder der Flüssigkeitsabscheider zwischen dem ersten Deckelkanal und einem Kopplungsanschluss angeordnet ist, um eine hierfür möglicherweise vorgesehene Schnellkupplung vor Verschmutzung oder Flüssigkeiten zu schonen.

Der erste Deckelkanal kann weiterhin in den Deckel integriert sein und sich zwischen mehreren Öffnungen, die über den Deckel verteilt sind, erstrecken.

Weiter vorteilhaft kann an der stirnseitigen Wandung des Faltenbalgs eine bevorzugt umlaufende radiale Bürstendichtung angeordnet sein. Eine umlaufende Bürstendichtung soll verhindern, dass Material beim Kompaktien organg hinter die stirnseitige Wandung gerät.

Zusätzlich kann eine glatte Wandung des Abfallbehältnisses die auftretende Reibung durch den Faltenbalg reduzieren. Dies kann etwa durch eine Teflonbeschichtung oder dergleichen erreicht werden.

Desweiteren kann der Faltenbalg durch mindestens eine Linearführung, beispielsweise eine Teleskop-Linearführung, die stirnseitige Wandung vor einer Kippbewegung bei ungleichmäßiger Kompaktierung schützen. Zusätzlich verhindert eine Führung die Beschädigung des Abfallbehältnisses durch eine undefinierte Bewegung. Die mindestens eine Linearführung könnte auf der Innenseite des Faltenbalges installiert sein. Die Linearführung kann nach Art einer Schubladenführung bzw. eines Kugelschienenauszugs ausgeführt sein.

Es ist vorteilhaft, den Faltenbalg mit einer oder mehreren weiteren der folgenden Eigenschaften zu versehen, um die Funktion noch weiter zu verbessern. Beispielsweise ist vorteilhaft, den Faltenbalg über einen Schnellverschluss und bevorzugt in Verbindung mit einem Einschub auswechselbar zu gestalten. Der Faltenbalg kann ferner durch geeignete Materialauswahl und Gestaltung eine gewisse Formstabilität aufweisen. Gleichzeitig sollte dieser jedoch auch relativ flach komprimierbar sein, was unter anderem zu einer Maximierung des verfügbaren Abfallvolumens führt. Der Faltenbalg muss eine ausreichende Haltbarkeit auch bei wechselnder mechanischer Beanspruchung aufweisen und insbesondere eine Beständigkeit gegen chemische Reinigungsmittel besitzen.

Gemäß einer Ausführungsform, die nicht von den Ansprüchen umfasst ist, weist das Kabinenmonument die Kompaktierungsvorrichtung auf, unter der ein Aufnahmeraum für den Trolley angeordnet ist, so dass der Trolley in dem Aufnahmeraum platzierbar ist und wobei die Kompaktierungsvorrichtung derart ausgebildet ist, um den Deckel mit dem Faltenbalg in Richtung des Trolleys zu verfahren, wenn der Trolley in dem Aufnahmeraum platziert ist, dass der Deckel zumindest indirekt derart mit dem Behälter in Verbindung gebracht wird, dass der Faltenbalg einem Behälterinnenraum des Behälters zugewandt ist und der Deckel den Behälterinnenraum bis auf den ersten Deckelkanal luftdicht abschließt, so dass Fluid mittels des ersten Deckelkanals aus dem Behälterinnenraum absaugbar ist.

Gemäß einem weiteren Aspekt der Erfindung wird die eingangs genannte Aufgabe gelöst durch ein weiteres System zum Kompaktieren von Abfall. Dieses System weist einen Trolley mit Kompaktierungsvorrichtung auf, wobei das Kabinenmonument einen Aufnahmeraum für den Trolley aufweist, so dass der Trolley in dem Aufnahmeraum platzierbar ist, wobei die Kompaktierungsvorrichtung einen in Fluidverbindung mit dem ersten Deckelkanal ausgebildeten, ersten Koppelanschluss aufweist, und wobei das Kabinenmonument einen ersten Koppelgegenanschluss aufweist, der mit dem ersten Koppelanschluss lösbar koppelbar ausgebildet ist, um eine Fluidverbindung zwischen dem ersten Koppelanschluss und dem ersten Koppelgegenanschluss herzustellen, so dass Fluid aus dem Behälterinnenraum mittels des ersten Koppelgegenanschlusses absaugbar ist.

Das System mit diesem Aufbau bietet den Vorteil, dass das Fluid aus dem Behälterinnenraum mittels des Kopplungsgegenanschlusses absaugbar ist. Wird der Trolley in den Aufnahmeraum des Kabinenmonuments geschoben, so ist es bevorzugt vorgesehen, dass sich dabei der erste Kopplungsanschluss und der Kopplungsgegenanschluss automatisch verbinden. Es ist deshalb bevorzugt vorgesehen, dass der erste Kopplungsanschluss und der erste Kopplungsgegenanschluss derart angeordnet sind, dass eine Kopplung zwischen den beiden Anschlüssen automatisch erfolgt, wenn der Trolley in den Aufnahmeraum platziert, insbesondere geschoben, wird. Außerdem können der Trolley und das Kabinenmonument korrespondierend zueinander ausgebildete Elemente aufweisen, die zur Arretierung und/oder Fixierung des Trolleys in dem Aufnahmeraum ausgebildet sind. So kann dem Kabinenmonument beispielsweise ein verdrehbarer Hebel zugeordnet sein, der, wenn der Trolley in den Aufnahmeraum platziert ist, derart verdreht werden kann, dass verhindert wird, dass der Trolley aus dem Aufnahmeraum herangezogen werden kann, sondern in dem Aufnahmeraum gehalten wird. Dies stellt sicher, dass die gegebenenfalls automatisch hergestellte Kopplung zwischen dem ersten Kopplungsanschluss und dem ersten Kopplungsgegenanschluss nicht versehentlich unterbrochen wird. Außerdem ist bevorzugt vorgesehen, dass der erste Kopplungsgegenanschluss, zumindest indirekt, mit einer Fluidabsaugeinrichtung, insbesondere einer Vakuumquelle, verbunden ist und/oder verbindbar ist, so dass das Fluid, insbesondere Luft, aus dem Behälterinnenraum mittels des ersten Koppelgegenanschlusses, des ersten Koppelanschlusses und dem ersten Deckelkanal aus dem Behälterinnenraum absaugbar ist.

Die Kompaktierungsvorrichtung des Trolleys weist einen in Fluidverbindung mit dem zweiten Deckelkanal ausgebildeten, zweiten Koppelanschluss auf, wobei das Kabinenmonument einen zweiten Koppelgegenanschluss aufweist, der mit dem zweiten Koppelanschluss lösbar koppelbar ausgebildet ist, um eine Fluidverbindung zwischen dem zweiten Koppelanschluss und dem zweiten Koppelgegenanschluss herzustellen, so dass Luft aus dem Faltenbalginnenraum mittels des zweiten Koppelgegenanschlusses absaugbar ist. Wie zuvor in analoger Weise für den ersten Koppelanschluss und den ersten Koppelgegenanschluss erörtert, ist es bevorzugt vorgesehen, dass der zweite Koppelanschluss und der zweite Koppelgegenanschluss derart ausgestaltet und/oder angeordnet sind, dass eine automatische Kopplung zwischen dem zweiten Koppelanschluss und dem zweiten Koppelgegenanschluss erfolgt, wenn der Trolley in den Aufnahmeraum platziert, insbesondere geschoben, wird. So kann es vorgesehen sein, dass der zweite Koppelanschluss in analoger Weise zu dem ersten Koppelanschluss und der zweite Koppelgegenanschluss in analoger Weise zu dem ersten Koppelanschluss ausgebildet ist. Durch eine Kopplung des zweiten Koppelanschlusses mit dem zweiten Koppelgegenanschluss wird gewährleistet, dass Luft aus dem Faltenbalginnenraum absaugbar ist. Dazu kann dem Kabinenmonument eine Luftabsaugeinheit, insbesondere eine Vakuumquelle, zugeordnet sein, die zumindest indirekt mit dem zweiten Koppelgegenanschluss verbunden ist und/oder verbindbar ist. Durch ein Absaugen von Luft aus dem Faltenbalginnenraum kann der Faltenbalg aus der ausgefalteten Stellung zurück in die zusammengefaltete Stellung bewegt werden. Denn mit dem Absaugen von Luft aus dem Faltenbalginnenraum entsteht in dem Faltenbalginnenraum ein Unterdruck, der auch auf die erste stirnseitige Wandung des Faltenbalgs, also vorzugsweise den Bodenbereich des Faltenbalgs, wirkt, so dass ausgehend von einer entsprechend hervorgerufenen Kraft eine Zusammenfaltung der Mantelwandung des Faltenbalgs hervorgerufen werden kann.

Eine vorteilhafte Ausgestaltung des Systems zeichnet sich dadurch aus, dass das Kabinenmonument ein steuerbares Mehrwegeventil aufweist, ein erster Eingang des Mehrwegeventils zumindest indirekt mit einer Vakuumquelle koppelbar ist, ein erster Ausgang des Mehrwegeventils in Fluidverbindung mit dem ersten Deckelkanal oder dem ersten Koppelgegenanschluss ausgebildet ist, ein zweiter Ausgang des Mehrwegeventils in Fluidverbindung mit dem zweiten Deckelkanal oder dem zweiten Koppelgegenanschluss ausgebildet ist, und dass das Mehrwegeventil derart steuerbar ist, um Fluid mittels der Vakuumquelle entweder aus dem Faltenbalginnenraum oder dem Behälterinnenraum abzusaugen, so dass der Faltenbalg zwischen der zusammengefalteten Stellung und der ausgefalteten Stellung, oder umgekehrt, bewegt wird.

Indem der erste Eingang des Mehrwegeventils zumindest indirekt mit der Vakuumquelle verbunden ist, kann ein entsprechendes Vakuum wahlweise an dem ersten Ausgang oder dem zweiten Ausgang angelegt werden. Dazu ist das Mehrwegeventil entsprechend steuerbar. Außerdem kann es vorgesehen sein, dass das Mehrwegeventil derart steuerbar ist, dass der erste Eingang mit keinem der beiden Ausgänge verbunden ist. In diesem Fall wird an keinem der Ausgänge ein entsprechendes Vakuum angelegt. Die Vakuumquelle kann dem System zugeordnet sein. Alternativ ist es möglich, dass die Vakuumquelle an einem anderen Ort, insbesondere in dem Fahrzeug, angeordnet ist, und dass der erste Eingang des Mehrwegeventils mittels einer Fluidverbindung mit der Vakuumquelle, zumindest indirekt, verbunden ist. Wird das Mehrwegeventil derart gesteuert, dass der erste Eingang mit dem ersten Ausgang in Fluidverbindung ist, so kann es vorgesehen sein, dass der erste Deckelkanal zumindest indirekt mit der Vakuumquelle verbunden ist. Somit wird Fluid, insbesondere Luft, aus dem Behälterinnenraum, bzw. dem Gehäuseinnenraum, abgesaugt, sofern der Deckel der Kompaktierungsvorrichtung derart mit dem Behälter, bzw. dem Trolleygehäuse, verbunden ist, so dass dazwischen eine fluiddichte Dichtung entsteht. Durch das Absaugen des Fluids, insbesondere der Luft, aus dem Behälterinnenraum, bzw. dem Gehäuseinnenraum, wird der Faltenbalg aus der zusammengefalteten Stellung in die ausgefaltete Stellung bewegt, so dass das Abfallbehältnis und/oder Abfall in dem Abfallbehältnis kompaktiert wird. Daraufhin kann das Mehrwegeventil derart gesteuert werden, dass der erste Eingang in Fluidverbindung mit dem zweiten Ausgang des Mehrwegeventils ist. In diesem Fall kann das Vakuum an den zweiten Deckelkanal angelegt werden, so dass Luft aus dem Faltenbalginnenraum abgesaugt wird, was eine entgegengesetzte Bewegung des Faltenbalgs hervorruft, so dass dieser aus der ausgefalteten Stellung in die zusammengefaltete Stellung zurückbewegt wird. Sofern der erste Ausgang in Fluidverbindung mit dem ersten Koppelgegenanschluss und der zweite Ausgang in Fluidverbindung mit dem zweiten Koppelgegenanschluss ausgebildet ist, kann der zuvor genannte Ablauf in analoger Weise erfolgen, sofern der erste Koppelgegenanschluss mit dem ersten Koppelanschluss und der zweite Koppelgegenanschluss mit dem zweiten Koppelanschluss gekoppelt sind, um entsprechende Fluidverbindungen herzustellen. Die zuvor erläuterte Wirkung auf den Faltenbalg und die erläuterte Bewegung des Faltenbalgs kann sodann analog zu der vorangegangenen Erläuterung erfolgen. Die zuvor erläuterte Ausgestaltung des Systems bietet also den Vorteil, dass mittels des steuerbaren Mehrwegeventils die Bewegung des Faltenbalgs steuerbar ist. Vorzugsweise ist es vorgesehen, dass das steuerbare Mehrwegeventil nach Art eines Drei/Zwei-Wegeventils ausgebildet ist.

Eine weitere vorteilhafte Ausgestaltung des Systems zeichnet sich dadurch aus, dass das Mehrwegeventil einen zweiten Eingang aufweist, der zumindest indirekt mit einer Umgebungsluft gekoppelt ist, wobei das Mehrwegeventil zumindest derart steuerbar ist, so dass der erste Eingang mit dem ersten Ausgang und der zweite Eingang mit dem zweiten Ausgang gekoppelt ist, oder so dass der erste Eingang mit dem zweiten Ausgang und der zweite Eingang mit dem ersten Ausgang gekoppelt ist.

Die zuvor genannte Umgebungsluft ist dabei insbesondere die Luft, die das Mehrwegeventil oder das System umgibt. So kann der zweite Eingang beispielsweise an einer Außenseite des Mehrwegeventils und/oder einer Außenseite der Kompaktierungsvorrichtung angeordnet sein. Indem das Mehrwegeventil den zweiten Eingang aufweist, kann beispielsweise der zweite Ausgang des Mehrwegeventils über den zweiten Eingang mit der Umgebungsluft gekoppelt sein. Ist dabei der erste Ausgang mit dem ersten Eingang, und somit beispielsweise mit der Vakuumquelle, indirekt gekoppelt, so kann dadurch Fluid aus dem Behälterinnenraum, bzw. dem Trolleygehäuseinnenraum, abgesaugt werden, so dass sich der Faltenbalg aus der zusammengefalteten Stellung in die ausgefaltete Stellung bewegt. Dabei vergrößert sich das Volumen des Faltenbalginnenraums. Um zu verhindern, dass in dem Faltenbalginnenraum ein Unterdruck entsteht, kann die Umgebungsluft durch den zweiten Eingang des Mehrwegeventils und sodann durch den zweiten Ausgang zu dem zweiten Deckelkanal strömen, der mit dem Innenraum des Faltenbalgs verbunden ist. Somit kann Luft aus der Umgebung in den Innenraum des Faltenbalgs strömen, wenn sich der Faltenbalg aus der zusammengefalteten Stellung in die entfaltete Stellung bewegt. Dies verhindert effektiv, dass der Faltenbalg an der zuvor genannten Bewegung gehindert wird.

Ist der zweite Eingang des Mehrwegeventils hingegen mit dem ersten Ausgang des Mehrwegeventils gekoppelt, und der erste Eingang des Mehrwegeventils mit dem zweiten Ausgang des Mehrwegeventils gekoppelt, so wirkt auf den Innenraum des Faltenbalgs ein Unterdruck, sofern der erste Eingang des Mehrwegeventils zumindest indirekt mit der Vakuumquelle gekoppelt ist. Um die Bewegung des Faltenbalgs von der ausgefalteten Stellung in die zusammengefaltete Stellung nicht zu behindern, kann Umgebungsluft durch den zweiten Eingang des Mehrwegeventils und sodann durch den ersten Ausgang des Mehrwegeventils zu dem ersten Deckelkanal strömen, so dass die Luft daraufhin in den Behälterinnenraum, bzw. den Gehäuseinnenraum, strömen kann, so dass der Faltenbalg an der zuvor genannten Bewegung nicht behindert wird. Vorzugsweise ist das steuerbare Mehrwegeventil nach Art eines Vier/Zwei-Wegeventils ausgebildet. So kann das Mehrwegeventil vorzugsweise derart steuerbar sein, dass keiner der Eingänge mit keinem der Ausgänge gekoppelt ist.

Eine weitere vorteilhafte Ausgestaltung des Systems zeichnet sich dadurch aus, dass dem Kabinenmonument ein steuerbares Hauptventil zugeordnet ist, das mit einer Vakuumquelle des Fahrzeugs koppelbar ist, und wobei das steuerbare Ventil mit dem ersten Eingang des Mehrwegeventils in Fluidverbindung ausgebildet ist. Das steuerbare Hauptventil bietet den Vorteil, dass die Vakuumquelle vorzugsweise als eine Konstantvakuumquelle ausgebildet sein kann. Somit kann von der Vakuumquelle des Fahrzeugs beispielsweise durchgehend ein Vakuum bereitgestellt werden. Wird dieses Vakuum zum Bewegen des Faltenbalgs benötigt, so ist das Vakuum durch Steuerung des Hauptventils derart an das steuerbare Mehrwegeventil weiterleitbar, dass der erste Eingang des steuerbaren Mehrwegeventils beispielsweise nur dann mit einem Vakuum beaufschlagt wird, wenn dies zur Bewegung des Faltenbalgs benötigt wird.

Weiterhin wird die eingangs genannte Aufgabe durch ein Fahrzeug, insbesondere ein Flugzeug, gelöst, das mindestens ein erfindungsgemäßes System gemäß der vorhergehenden Beschreibung aufweist.

### KURZE BESCHREIBUNG DER FIGUREN

Weitere Merkmale, Vorteile und Anwendungsmöglichkeiten der vorliegenden Erfindung ergeben sich aus der nachfolgenden Beschreibung der Ausführungsbeispiele und den Figuren. In den Figuren stehen weiterhin gleiche Bezugszeichen für gleiche oder ähnliche Objekte.
- Fig. 1 bis 7: zeigen beispielhafte Ausgestaltungen des Trolleys eines erfindungsgemäßen Systems in schematischen Querschnittsansichten.
- Fig. 8: zeigt eine weitere beispielhafte Ausgestaltung des Trolleys in einer schematischen Perspektivansicht.
- Fig. 9: zeigt einen Ausschnitt des Trolleys aus der Fig. 8.
- Fig. 10 bis 12: zeigen beispielhafte, nicht beanspruchte Ausgestaltungen des Systems in verschiedenen Ansichten.
- Fig. 13 bis 15: zeigen eine weitere Ausführung eines Trolleys in unterschiedlichen Darstellungen.

### DETAILLIERTE DARSTELLUNG EXEMPLARISCHER AUSFÜHRUNGSFORMEN

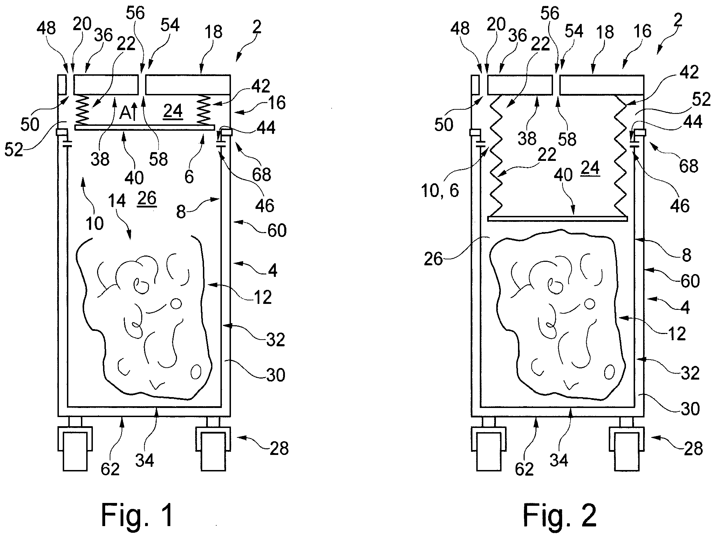

In der Fig. 1 ist ein Trolley 2 in einer schematischen Querschnittsansicht gezeigt. Der Trolley 2 dient zum Sammeln von Abfall. Der Trolley weist dazu ein Trolleygehäuse 4 auf. Das Trolleygehäuse 4 hat eine oberseitige Gehäuseöffnung 6. An der Unterseite des Trolleygehäuses 4 sind Rollen 28 angebracht, so dass der Trolley 2 geschoben oder gezogen werden kann. In einen von dem Trolleygehäuse 4 gebildeten Gehäuseinnenraum 30 ist ein Behälter 8 eingesetzt. Der Gehäuseinnenraum 30 wird auch als Trolleygehäuseinnenraum 30 bezeichnet. Der Behälter 8 ist vorzugsweise als Metallbehälter oder als Kunststoffbehälter ausgebildet. Somit können die Seitenwände 32 und der Boden 34 des Behälters 8 fluiddicht sein. An einer von dem Boden 34 gegenüberliegenden Seite des Behälters 8 ist eine Behälteröffnung 10 vorgesehen.

Zur Aufnahme von Abfall ist ein auswechselbares Abfallbehältnis 12 in dem Behälter 8 angeordnet. Das Abfallbehältnis 12 kann beispielsweise ein Abfallbeutel oder ein Abfallkarton sein. Das Abfallbehältnis 12 weist eine oberseitige Behältnisöffnung 14 auf. Dabei ist das Abfallbehältnis 12 derart in den Behälter 8 eingesetzt, dass die Behältnisöffnung 14 und die Behälteröffnung 10 fluchtend zueinander sind. Weiterhin ist es vorgesehen, dass die Behältnisöffnung 10 und die Gehäuseöffnung 6 des Trolleygehäuses 4 fluchtend zueinander sind. Somit kann Abfall durch die Gehäuseöffnung 6, die Behälteröffnung 10 und die Behältnisöffnung 14 in das Abfallbehältnis 12 gegeben werden.

Um Abfall einzusammeln, kann der Trolley 2 beispielsweise durch einen Kabinengang eines Fahrzeugs geschoben werden, wobei von Passagieren entgegengenommener Abfall auf die zuvor erläuterte Weise in das Abfallbehältnis 12 gegeben wird. In der Praxis wurde festgestellt, dass ein derart eingesammelter Abfall in dem Abfallbehältnis eine geringe Dichte aufweist. Denn beispielsweise Dosen und/oder leere Verpackungen umschließen ein Luftvolumen, was zu einer entsprechend geringen Dichte des Abfalls in dem Abfallbehältnis 12 führt.

Um den Abfall in dem Abfallbehältnis 12 zu verdichten, ist für den Trolley 2 eine Kompaktierungsvorrichtung 16 vorgesehen. Die Kompaktierungsvorrichtung 16 kann lösbar mit dem Trolleygehäuse 4 verbunden werden oder verbunden sein. So kann die Kompaktierungsvorrichtung 16 beispielsweise einen integralen Teil eines Trolleygehäusedeckels bilden. Weiterhin kann es vorgesehen sein, dass die Kompaktierungsvorrichtung 16 separat handhabbar ist, so dass die Verbindung von der Kompaktierungsvorrichtung 16 zu dem übrigen Trolley 2, insbesondere mit dem Trolleygehäuse 6, nur bei Bedarf hergestellt wird. Weiterhin kann es vorgesehen sein, dass die Kompaktierungsvorrichtung 16 schwenkbar gelagert mit dem Trolleygehäuse 4 verbunden ist. Weiterhin kann es vorgesehen sein, dass die Kompaktierungsvorrichtung 16 mittels einer Linearführung des Trolleys in Querrichtung verschiebbar ist, so dass die Kompaktierungsvorrichtung 16 seitlich über das Trolleygehäuse 4 hinausragt, so dass dadurch die Gehäuseöffnung 6 des Trolleygehäuses 4 zugänglich ist. Darüber hinaus kann die Linearführung dazu ausgebildet sein und/oder ein weiteres Gelenk vorgesehen sein, um die Kompaktierungsvorrichtung 16 nach unten zu verschwenken, so dass die Kompaktierungsvorrichtung 16 seitlich an dem Trolleygehäuse 4 angeordnet werden kann. Um bei Bedarf eine Kompaktierung des Abfalls bzw. des Abfallbehältnisses 12 auszuführen, kann die Kompaktierungsvorrichtung 16 wieder zurückgeschwenkt und mittels der Linearführung wieder zurückgeschoben werden, so dass die Kompaktierungsvorrichtung 16 wieder oben auf dem Trolleygehäuse 4 sitzt, um sodann die genannte Kompaktierung des Abfalls bzw. des Abfallbehältnisses 12 auszuführen. Sofern die zuvor erläuterte dreh-, schwenk- und/oder längsverschiebbare Verbindung zwischen dem Trolleygehäuse 4 und der Kompaktierungsvorrichtung 16 nicht vorgesehen ist, kann die Kompaktierungsvorrichtung 16, sofern sie temporär nicht verwendet wird, auch an einer anderen Stelle vorübergehend gelagert werden.

Die Kompaktierungsvorrichtung 16 weist einen Deckel 18 auf. Der Deckel 18 kann beispielsweise einen plattenfönnigen oder U-förmigen Querschnitt aufweisen. Außerdem weist der Deckel 18 einen ersten Deckelkanal 20 auf. Der Deckelkanal 20 erstreckt sich dabei von einer Oberseite 36 des Deckels 20 zu einer Unterseite 38 des Deckels 18. Der erste Deckelkanal 20 kann als Kanal zum Leiten von Fluid, insbesondere Luft und/oder Flüssigkeit, ausgebildet sein.

Außerdem weist die Kompaktierungsvorrichtung 16 einen unterseitig an dem Deckel 18 angeordneten Faltenbalg 22 auf. Der Faltenbalg 22 ist also mit der Unterseite 38 des Deckels 18 verbunden. Der Faltenbalg 22 weist eine von dem Deckel 18 abgewandte, erste stirnseitige Wandung 40 auf. Die erste stirnseitige Wandung 40 des Faltenbalgs 22 kann starr ausgebildet sein. Dazu kann die stirnseitige Wandung 40 des Faltenbalgs 22 von einem Metall und/oder einem faserverstärkten Kunststoff gebildet sein. Weiterhin kann es vorgesehen sein, dass eine starre Verstärkungsplatte, insbesondere aus Metall und/oder einem faserverstärkten Kunststoff, an der ersten stirnseitigen Wandung 40 des Faltenbalgs 22 angeordnet ist. Dabei kann die starre Verstärkungsplatte die erste stirnseitige Wandung 40 des Faltenbalgs zumindest teilweise mitbilden. Eine zu der ersten stirnseitigen Wandung 40 gegenüberliegende, zweite stirnseitige Wandung des Faltenbalgs 22 kann zumindest im Wesentlichen analog zu der ersten stirnseitigen Wandung 40 ausgebildet sein. Bevorzugt ist jedoch, dass die zweite stirnseitige Wandung des Faltenbalgs 22 von dem Deckel 18 gebildet wird. Darüber hinaus weist der Faltenbalg 22 eine sich von der ersten stirnseitigen Wandung 40 zu der Unterseite 38 des Deckels 18 erstreckende, insbesondere zylindrische, Mantelwandung 42 auf. Die Mantelwandung 42 ist vorzugsweise faltenartig ausgestaltet. Dabei muss die Mantelwandung 42 nicht notwendigerweise einen kreisförmigen Querschnitt aufweisen. Andere Querschnitte sind ebenfalls denkbar. Vorzugsweise weist die Mantelwandung 42 eine Mehrzahl von Faltlinien auf, die in Axialrichtung A des Faltenbalgs 22 voneinander beabstandet sind. An den Faltlinien lässt sich die Mantelwandung falten, so dass die Mantelwandung 42 in Axialrichtung A auseinander- bzw. zusammenfaltbar ausgebildet ist. Außerdem ist es vorgesehen, dass die erste stirnseitige Wandung 40 sowie die Mantelwandung 42 des Faltenbalgs 22 fluiddicht, insbesondere luftdicht, ausgebildet sind. Außerdem ist der Faltenbalg 22 fluiddicht mit dem Deckel 18 verbunden.

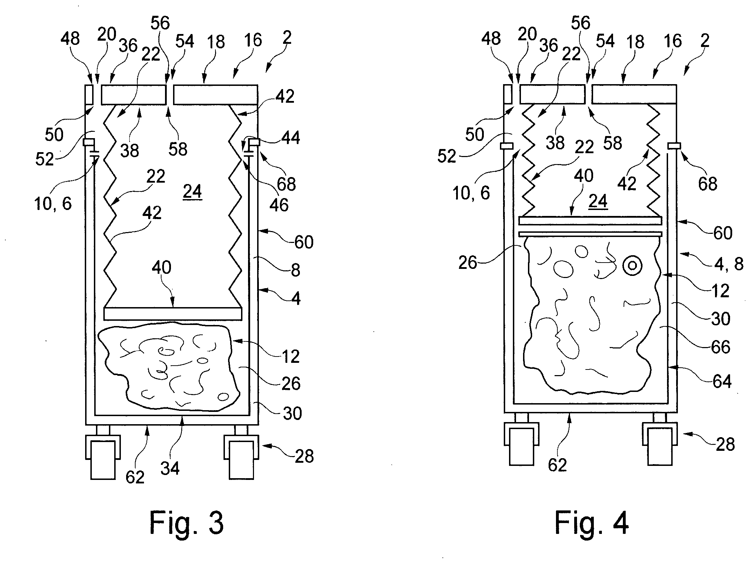

Die zuvor erläuterte Ausgestaltung des Faltenbalgs 22 bietet den Vorteil, dass der Faltenbalg 22 zwischen einer zusammengefalteten Stellung, wie sie in Fig. 1 gezeigt ist und in der ein Faltenbalginnenraum 24 des Faltenbalgs 22 ein erstes Volumen aufweist, und einer ausgefalteten Stellung, wie sie beispielsweise in Fig. 3 gezeigt ist und in der der Faltenbalginnenraum 24 ein gegenüber dem ersten Volumen vergrößertes, zweites Volumen aufweist, bewegbar ist. Wie aus der Fig. 2 zu erkennen ist, sind die zuvor genannten Stellungen des Faltenbalgs jedoch nur zwei von einer Vielzahl von möglichen Stellungen, die der Faltenbalg 22 einnehmen kann. Mit dem Faltenbalginnenraum 24 ist bevorzugt der Raum gemeint, der von dem Faltenbalg 22, und bevorzugt dem Deckel 18, eingeschlossen ist.

Zum Kompaktieren von Abfall in dem Abfallbehältnis 12 und/oder zum Kompaktieren des Abfallbehältnisses 12 selbst wird der Deckel 18 zumindest indirekt derart mit dem Behälter 8 in Verbindung gebracht, dass der Faltenbalg 22 dem Behältnisinnenraum 26 des Behälters 8 zugewandt ist und der Deckel 18 den Behältnisinnenraum 26 bis auf den ersten Deckelkanal 20 luftdicht abschließt. Dazu kann die Kompaktierungsvorrichtung 16 mit dem Deckel 18 auf die Oberseite des Trolleygehäuses 4 aufgesetzt werden. Der Deckel 18 kann einen umlaufenden Dichtsitz 44 aufweisen, der beim Aufsetzen der Kompaktierungsvorrichtung 16 mit einem oberseitigen Rand 46 des Behälters 8 derart in Verbindung kommt, dass sich zwischen dem Dichtsitz 44 und dem Rand 46 eine luftdichte Dichtung ausbildet. An dem Dichtsitz 44 und/oder an dem Rand 46 kann ein umlaufendes Dichtmittel, beispielsweise eine Gummidichtung, angeordnet sein, damit die genannte Dichtung besonders luftdicht ist.

Außerdem ist es vorgesehen, dass sich der erste Deckelkanal 20 von einer ersten Öffnung 48, vorzugsweise an der Deckeloberseite 36, des Deckels 18 zu einer zweiten Öffnung 50 an der Deckelunterseite 38 des Deckels 18 erstreckt, wobei die zweite Öffnung 50 des ersten Deckelkanals 20 radial außenseitig zu dem Faltenbalg 22 angeordnet ist. Damit wird verhindert, dass der erste Deckelkanal 20 in Fluidverbindung bzw. Luftverbindung mit dem Faltenbalginnenraum 24 ist. Vielmehr ist der erste Deckelkanal 22 in Fluidverbindung mit einem Zwischenraum 52, der radial außenseitig zu dem Faltenbalg 22 ist. Durch die luftdichte Verbindung zwischen dem Deckel 18 und dem Behälter 8 ist der Zwischenraum 52 mit dem Behälterinnenraum 26 des Behälters 8 verbunden. Hingegen ist der Faltenbalginnenraum 24 durch den Faltenbalg 22 von dem Zwischenraum 52 sowie von dem Behälterraum 26 getrennt. Wird nun Fluid, insbesondere Luft, mittels des ersten Deckelkanals 20 abgesaugt, strömt Luft aus dem Zwischenraum 52 sowie aus dem Behälterinnenraum 26 durch den ersten Deckelkanal 20. Damit sinkt der Druck in dem Behälterinnenraum 26. Ein entsprechender Unterdruck wirkt insbesondere auf die erste stirnseitige Wandung 40 des Faltenbalgs 22, was eine entsprechende Kraft auf die erste stirnseitige Wandung 40 in Richtung des Behälterinnenraums 26 hervorruft. Die Mantelwandung 42 des Faltenbalgs 22 kann sich entfalten, so dass durch die zuvor erläuterte Krafteinwirkung auf die erste stirnseitige Wandung 40 eine Abwärtsbewegung der ersten stirnseitigen Wandung 40 des Faltenbalgs 22 in Richtung des Abfallbehältnisses 12 hervorgerufen wird. Mit anderen Worten kann der Faltenbalg 22 durch ein Absaugen von Fluid aus dem Behältnisinnenraum 26 mittels des ersten Deckelkanals 20 in die ausgefaltete Stellung bewegt werden, so dass der Faltenbalg 22 derart weit in den Behältnisinnenraum 26 ragt, dass das Abfallbehältnis 12 und/oder Abfall in dem Abfallbehältnis 12 kompaktiert wird. Das Abfallbehältnis 12 kann, wie in Fig. 2 schematisch dargestellt ist, zuvor verschlossen werden, so dass die erste stirnseitige Wandung 40 des Faltenbalgs 22 zunächst auf das Abfallbehältnis 12 trifft. Wird das Absaugen des Fluids aus dem Behältnisinnenraum 26 fortgesetzt, drückt die erste stirnseitige Wandung 40 des Faltenbalgs 22 auf das Abfallbehältnis 12 sowie auf den darin aufgenommenen Abfall, was eine Verdichtung bzw. Kompaktierung des Abfallbehältnisses 12 bzw. des darin aufgenommenen Abfalls bewirkt. Ein entsprechend kompaktiertes Abfallbehältnis 12 bzw. ein entsprechend kompaktierter Abfall in dem Abfallbehältnis 12 ist in Fig. 3 schematisch wiedergegeben.

Wie aus den Fig. 1 bis 3 ersichtlich wird, vergrößert sich der Faltenbalginnenraum 24, wenn der Faltenbalg 22 aus der zusammengefalteten Stellung, wie in Fig. 1 schematisch dargestellt, in die ausgefaltete Stellung, wie in Fig. 3 dargestellt, bewegt wird. Um ein besonders leichtes Entfalten des Faltenbalgs 22 zu erlauben, ist es bevorzugt vorgesehen, dass der Deckel 18 einen in Fluidverbindung mit dem Faltenbalginnenraum 24 ausgebildeten, zweiten Deckelkanal 54 aufweist. Der zweite Deckelkanal 54 ist dabei nicht in Fluidverbindung mit dem Zwischenraum 52 ausgebildet. Vielmehr ist es vorgesehen, dass der zweite Deckelkanal 54 eine Fluidverbindung zwischen dem Faltenbalginnenraum 24 und einer Umgebungsluft zum Entfalten des Faltenbalgs 22 herstellt. Erfolgt nun das Entfalten des Faltenbalgs 22, so kann Umgebungsluft durch den zweiten Deckelkanal 54 in den Faltenbalginnenraum 24 einströmen, so dass sich das Volumen des Faltenbalginnenraums 24 vergrößern kann. Vorzugsweise erstreckt sich der zweite Deckelkanal von einer zugehörigen ersten Öffnung 56 an der Oberseite 36 des Deckels 18 zu einer zweiten Öffnung 58 an der Unterseite 38 des Deckels 18. Die zweite Öffnung 58 des zweiten Deckelkanals 54 stellt dabei die Verbindung zu dem Faltenbalginnenraum 24 her. Bis auf den zweiten Deckelkanal 54 ist der Faltenbalginnenraum 24 bevorzugt fluiddicht, insbesondere luftdicht, ausgebildet.

Durch die Verbindung des zweiten Deckelkanals 56 mit dem Faltenbalginnenraum 24 besteht die Möglichkeit, dass der Faltenbalg 22 durch Absaugen von Luft aus dem Faltenbalginnenraum 24 wieder in die zusammengefaltete Stellung bewegt wird. Dazu kann der erste Deckelkanal 20, zumindest indirekt, mit Umgebungsluft verbunden werden. Wird nun die Luft aus dem Faltenbalginnenraum 24 abgesaugt, entsteht in dem Faltenbalginnenraum 24 ein Unterdruck, was eine Kraft auf die erste stirnseitige Wandung 40 des Faltenbalgs 22 in Richtung des Deckels 8 hervorruft. Somit bewegt sich die erste stirnseitige Wandung 40 aufgrund der genannten Kraft in Richtung des Deckels 18, was ein Zusammenfalten der Mantelwandung 42 verursacht. Ist ausreichend Luft aus dem Faltenbalginnenraum 24 abgesaugt, so wird die eingefaltete Stellung des Faltenbalgs 22, wie sie in Fig. 1 gezeigt ist, wieder erreicht. Zusammenfassend kann deshalb festgestellt werden, dass durch Absaugen von Fluid durch den ersten Deckelkanal 20 oder den zweiten Deckelkanal 54 eine Bewegung des Faltenbalgs 22 steuerbar ist, und zwar vorzugsweise zumindest zwischen der zusammengefalteten Stellung und der ausgefalteten Stellung, oder umgekehrt.

Ein Unterdruck zum Absaugen des zuvor genannten Fluids kann von einer Unterdruckquelle bereitgestellt werden. Außerdem kann ein steuerbares Ventil vorgesehen sein, wobei ein Eingangsanschluss des steuerbaren Ventils zumindest indirekt mit der Unterdruckquelle verbunden ist und wobei das steuerbare Ventil zwei Ausgänge aufweist, die jeweils mit einem der Deckelkanäle 20, 54 verbunden sind. Das steuerbare Ventil kann sodann derart gesteuert werden, dass entweder der erste Deckelkanal 20 oder der zweite Deckelkanal 54 mit einem Unterdruck beaufschlagt wird. Dies ruft die entsprechende Bewegung des Faltenbalgs 22 hervor. Dabei ist es bevorzugt vorgesehen, dass das steuerbare Ventil jeweils denjenigen Deckelkanal 20, 54 mit Umgebungsluft koppelt, an dem nicht der Unterdruck anliegen soll.

Insbesondere zu der Fig. 1 wurde erläutert, dass der Behälter 8 in den Trolleygehäuseinnenraum 30 eingesetzt ist, und dass beim Aufsetzen der Kompaktierungsvorrichtung 16 eine fluiddichte Verbindung zwischen dem Deckel 18 und dem Behälter 8 entsteht, so dass der Zwischenraum 52 mit dem Behälterinnenraum 26 verbunden wird, um Fluid durch den ersten Deckelkanal 20 aus dem Behälterinnenraum 26 abzusaugen. Gemäß einer weiteren vorteilhaften Ausgestaltung, wie sie schematisch in Fig. 4 dargestellt ist, kann es jedoch auch vorgesehen sein, dass auf die unmittelbare luftdichte Verbindung zwischen dem Deckel 18 und dem Behälter 8 verzichtet wird. Denn das Trolleygehäuse 4 kann bevorzugt luftdicht ausgebildet sein. Dazu können die entsprechenden Seitenwände 60 und der Boden 62 des Trolleygehäuses 4 luftdicht ausgestaltet sein und entsprechend miteinander verbunden sein. Somit kann das Trolleygehäuse 4 den Behälter 8 bilden. Ein separater Behälter wird in diesem Fall also nicht benötigt. Auf die vorangegangenen Erläuterungen zu den Fig. 1 bis 3 wird in analoger Weise Bezug genommen, wobei dabei angenommen werden soll, dass der Behälter 8 von dem Trolleygehäuse 6 gebildet ist. Insbesondere bildet der Trolleygehäuseinnenraum 24 in diesem Fall den Behältnisinnenraum 26.

Um zu verhindern, dass möglicherweise aus dem Abfallbehältnis 12 auslaufende Flüssigkeiten in direkten Kontakt mit dem Trolleygehäuse 4 kommen, kann in dem Trolleygehäuse 4 eine Auffangwanne 64 angeordnet sein. Diese Auffangwanne 64 kann derart in dem Trolleygehäuseinnenraum 30 angeordnet sein, dass das Abfallbehältnis 12 in dem von der Auffangwanne 64 gebildeten Innenraum angeordnet ist. Obwohl das Abfallbehältnis 12 zwar zunächst in dem von der Auffangwanne gebildeten Innenraum 66 angeordnet ist, soll damit jedoch auch gemeint sein, dass das Abfallbehältnis 12 in dem Trolleygehäuseinnenraum 24 angeordnet ist.

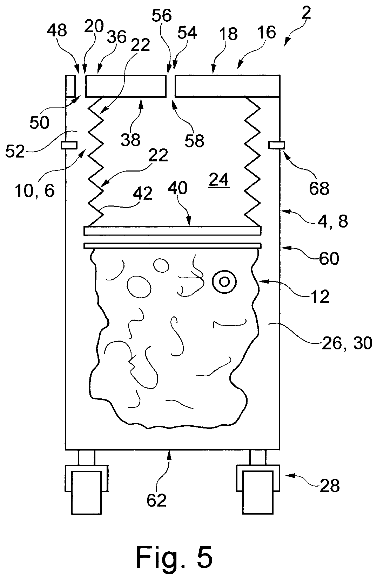

Gemäß einer weiteren vorteilhaften Ausgestaltung, wie sie schematisch in Fig. 5 gezeigt ist, kann darüber hinaus auf die Auffangwanne 64 verzichtet werden. Ansonsten wird auf die Erläuterungen zu der Fig. 5 in analoger Weise Bezug genommen.

Zu den beiden zuvor genannten Ausgestaltungen sei noch darauf hingewiesen, dass der Deckel 18 eine luftdichte Verbindung mit dem oberseitigen Rand des Trolleygehäuses 68 herstellt, wenn die Kompaktierungsvorrichtung 16 mit dem Trolleygehäuse 4 in Verbindung gebracht wird. Somit kann durch ein entsprechendes Absaugen von Fluid, insbesondere Luft, durch den ersten Deckelkanal 20 eine Abwärtsbewegung der ersten, stirnseitigen Wandung 40 des Faltenbalgs 22 hervorgerufen werden, um das Abfallbehältnis 12, bzw. den Abfall in dem Abfallbehältnis 12, zu kompaktieren bzw. zu verdichten. Außerdem sei darauf hingewiesen, dass durch ein Absaugen von Luft durch den zweiten Deckelkanal 54 eine Aufwärtsbewegung der ersten stirnseitigen Wandung 40 des Faltenbalgs 22 hervorgerufen werden kann, so dass der Faltenbalg 22 wieder in die eingefaltete Stellung bewegbar ist.

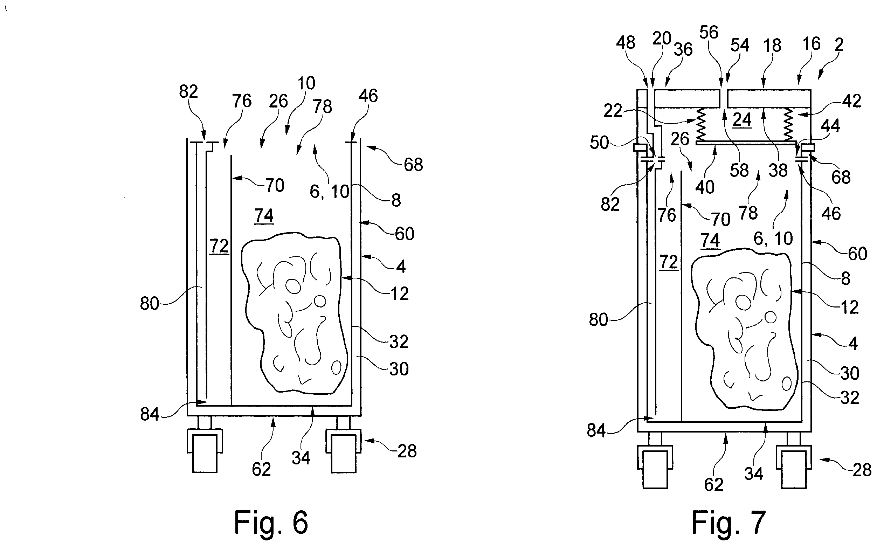

In der Fig. 6 ist eine weitere vorteilhafte Ausgestaltung des Trolleys 2 in einer schematischen Querschnittsansicht dargestellt. Dabei ist der Behälterinnenraum 26 durch eine Trennwand 70 in eine Flüssigkeitskammer 72 und eine Feststoffkammer 74 unterteilt. Die Flüssigkeitskammer 72 dient zur Aufnahme von flüssigem Abfall. Die Feststoffkammer 74 dient zur Aufnahme des Abfallbehältnisses 12 und somit zur Aufnahme von Feststoffabfall. Die Flüssigkeitskammer 72 und die Feststoffkammer 74 erstrecken sich jeweils bis zu der Behälteröffnung 10. Dabei kann sich die Trennwand 70 von einem Boden 34 des Behälters 8 bis zu der Behälteröffnung 10 erstrecken. Alternativ kann es vorgesehen sein, dass die Trennwand 70 eine Ausnehmung in einem behälteröffnungsseitigen Endabschnitt aufweist, durch das Gas, insbesondere Luft, aus der Feststoffkammer 74 in die Flüssigkeitskammer 72 strömen kann.

Außerdem ist es vorgesehen, dass sich die Flüssigkeitskammer 72 und die Feststoffkammer 74 jeweils derart bis zu der Behälteröffnung 10 erstrecken, so dass durch einen Flüssigkeitskammerbereich 76 der Behälteröffnung 10 Flüssigkeit in die Flüssigkeitskammer 72 beförderbar ist und so dass durch einen Feststoffkammeröffnungsbereich 78 der Behälteröffnung 10 Feststoff in die Feststoffkammer 74 bzw. in das Abfallbehältnis 12 beförderbar ist.

Außerdem weist der Behälter eine Absaugleitung 80 auf, die sich von einer behälteröffnungsseitigen, ersten Leitungsöffnung 82 bis zu einer zweiten Leitungsöffnung 84 in einem bodenseitigen Bereich der Flüssigkeitskammer 72 erstreckt. Wird nun mittels des Trolleys 2 Abfall eingesammelt, so kann Feststoffabfall in dem Abfallbehältnis 12 gesammelt werden. Flüssiger Abfall kann die Flüssigkeitskammer 72 gegeben werden. Soll nun der Feststoffabfall in dem Abfallbehältnis 12 bzw. das Abfallbehältnis 12 kompaktiert werden, so wird die Kompaktierungsvorrichtung 16 auf das Trolleygehäuse 4 aufgesetzt, wie es beispielhaft in Fig. 7 schematisch dargestellt ist. Dabei ist es vorgesehen, dass die erste Leitungsöffnung 82 der Absaugleitung 80 und die zweite Öffnung 50 des ersten Deckelkanals 20 derart angeordnet sind, dass die zweite Öffnung 50 des ersten Deckelkanals 20 fluiddicht auf der ersten Leitungsöffnung 82 zumindest indirekt aufliegt. Mit anderen Worten soll der erste Deckelkanal 20 und die Absaugleitung 80 derart ausgebildet sein, dass eine Fluidverbindung zwischen dem ersten Deckelkanal 20 und dem Deckelkanal 80 entsteht, wenn der Deckel 18 der Kompaktierungsvorrichtung 16 mit dem Behälter 8 in Verbindung gebracht wird. Erfolgt nun das Absaugen von Fluid mittels des ersten Deckelkanals 20, wird zunächst die in der Flüssigkeitskammer 72 angesammelte Flüssigkeit abgesaugt. Denn die zweite Leitungsöffnung 84 der Absaugleitung 80 ist in dem bodenseitigen Bereich der Flüssigkeitskammer 72 angeordnet. Ist die Flüssigkeit, zumindest im Wesentlichen, aus der Flüssigkeitskammer 72 abgesaugt, kann daraufhin Luft aus der Feststoffkammer 74 durch die Flüssigkeitskammer 72 in die Leitungsöffnung 84 strömen. Das entsprechende Überströmen kann durch die Ausnehmung in der Trennwand 70 gewährleistet sein. Wie aus der Fig. 7 ersichtlich ist, kann jedoch auch der Deckel 18 derart ausgestaltet sein, dass Luft aus der Feststoffkammer 74 durch den Zwischenraum 52 in die Flüssigkeitskammer 72 strömen kann. Wird das Absaugen von Fluid, also nunmehr Luft, mittels des ersten Deckelkanals 20 fortgesetzt, so entsteht ein Unterdruck in dem Behälterinnenraum 26, bzw. auch in dem Zwischenraum 52, was die bereits erläuterte Auswirkung auf die erste, stirnseitige Wandung 40 des Faltenbalgs 22 hat. Auf die erste, stirnseitige Wandung 40 des Faltenbalgs 22 wirkt also eine Kraft in Richtung des Abfallbehältnisses 12, so dass sich der Faltenbalg 22 von der zusammengefalteten Stellung in die ausgefaltete Stellung bewegt, um das Abfallbehältnis 12, bzw. den darin gesammelten Abfall, zu kompaktieren bzw. zu verdichten.

Die zuvor erläuterte Ausgestaltung des Trolleys 2 bietet den Vorteil, dass Abfälle, getrennt nach Flüssigkeit und Feststoff, gesammelt werden können, und dass die gesammelte Flüssigkeit zunächst durch Absaugen von Fluid mittels des ersten Deckelkanals 20 erfolgt, um die Flüssigkeit vorzugsweise separat zu lagern, und um sodann die Kompaktierung des Feststoffabfalls erfolgen zu lassen.

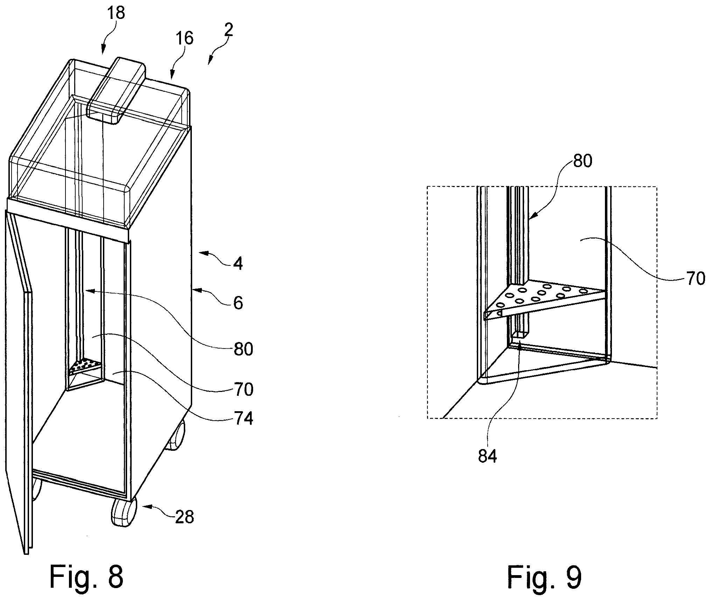

In der Fig. 8 ist die Ausgestaltung des Trolleys 2, wie sie zuvor im Zusammenhang mit den Fig. 6 und 7 erläutert wurde, in einer schematischen Perspektivansicht dargestellt. Hierbei wurde jedoch auf die Darstellung des Abfallbehältnisses 12 verzichtet. Außerdem wurde die vorderseitige Wand des Behälters 8 ausgeblendet, um einen Einblick in den Behälterinnenraum 26 des Behälters 8 zu ermöglichen. Aus der Fig. 8 ist ersichtlich, dass sich die Trennwand 70 vorzugsweise zwischen zwei Seitenwänden des Behälters 8 erstreckt.

Die Fig. 9 zeigt einen Ausschnitt der Darstellung aus der Fig. 8. Dieser Ausschnitt zeigt in einer halbtransparenten Darstellung den bodenseitigen Bereich der Flüssigkeitskammer 72. Aus der Fig. 9 wird ersichtlich, dass die Absaugleitung 80 vorzugsweise integral mit dem Behälter 8, insbesondere mit mindestens einer Behälterwandung des Behälters 8, ausgebildet sein kann. Außerdem zeigt die Fig. 9, dass sich die Absaugleitung 80 nicht vollständig bis zu dem Boden 34 des Behälters 8 erstreckt, sondern von diesem beabstandet ist. Die zweite Leitungsöffnung 84 kann deshalb in unmittelbarer Bodennähe der Flüssigkeitskammer 72 angeordnet sein, so dass durch ein Absaugen von Fluid durch den ersten Deckelkanal 20 und sodann durch die Absaugleitung 80 eine Flüssigkeit aus der Flüssigkeitskammer 72 annähernd vollständig absaugbar ist. Darüber hinaus kann in der Flüssigkeitskammer 72, insbesondere in dem bodenseitigen Bereich der Flüssigkeitskammer 72, ein Sieb und/oder eine sich in Querrichtung erstreckende Wand mit Durchgangsbohrungen angeordnet sein, um zu verhindern, dass kleine Feststoffe in der Flüssigkeit bis zu der zweiten Leitungsöffnung 84 der Absaugleitung 80 gelangen können. Dies verhindert eine Verstopfung der Absaugleitung 80.

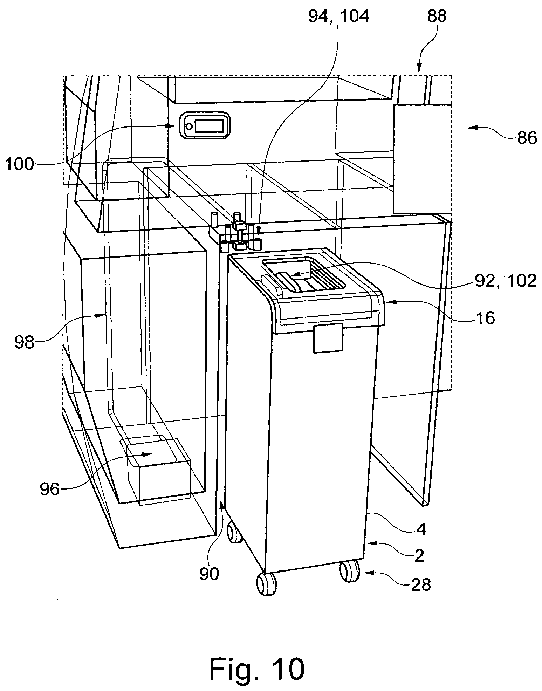

In der Fig. 10 ist ein System 86 dargestellt. Das System 86 weist einen Trolley 2 auf, wie dieser zuvor erläutert wurde. Außerdem weist das System 86 ein Kabinenmonument 88 für ein Fahrzeug auf. Das Kabinenmonument 88 weist einen Aufnahmeraum 90 für den Trolley 2 auf, so dass der Trolley 2 in dem Aufnahmeraum 90 platzierbar ist. Dazu kann der Trolley 2 in den Aufnahmeraum 90 geschoben werden. Weiterhin ist es vorgesehen, dass die Kompaktierungsvorrichtung 16 des Trolleys 2 einen in Fluidverbindung mit dem ersten Deckelkanal 20 ausgebildeten, ersten Koppelanschluss 92 aufweist. Außerdem ist es vorgesehen, dass das Kabinenmonument 88 einen ersten Koppelgegenanschluss 94 aufweist. Der erste Koppelgegenanschluss 94 ist derart ausgebildet, dass der erste Koppelanschluss 92 lösbar mit dem ersten Koppelgegenanschluss 94 koppelbar ist, um eine Fluidverbindung zwischen dem ersten Koppelanschluss 92 und dem ersten Koppelgegenanschluss 94 herzustellen, so dass Fluid aus dem Behälterinnenraum 26 mittels der Anschlüsse 92, 94 absaugbar ist. Die Kopplung zwischen dem ersten Koppelanschluss 92 und dem ersten Koppelgegenanschluss 94 kann dabei automatisch erfolgen, wenn der Trolley 2 in den Aufnahmeraum 90 geschoben wird. Der erste Koppelanschluss 92 und der erste Koppelgegenanschluss 94 können entsprechend ausgebildet und/oder angeordnet sein.

Wird der Trolley 2 nach dem Einsammeln von Abfall in den Aufnahmeraum 90 des Kabinenmonuments geschoben, so kann daraufhin die Kompaktierung des Abfallbehältnisses 12, bzw. des darin gesammelten Abfalls, erfolgen, indem Fluid, insbesondere Luft, durch den ersten Koppelgegenanschluss 94 abgesaugt wird. Der erste Koppelgegenanschluss 94 kann zumindest indirekt mit einer Vakuumquelle 96 verbunden sein, um das Absaugen des Fluids hervorzurufen. Dabei ist die Vakuumquelle 96 nicht notwendigerweise Bestandteil des Kabinenmonuments 88. Der erste Koppelgegenanschluss 94 kann mittels einer Fluidleitung 98, in der vorzugsweise ein Ventil integriert ist, mit der Vakuumquelle 96 verbunden sein. Um das Vakuum, das von der Vakuumquelle 96 bereitgestellt wird, bei dem ersten Koppelgegenanschluss 94 anzulegen, kann das Kabinenmonument eine Eingabeeinheit 100, insbesondere umfassend einen Taster, aufweisen, um durch Betätigung der Eingabeeinheit 10 ein Signal zu generieren, auf dessen Basis das Vakuum an den ersten Koppelgegenanschluss 94 angelegt wird.

Eine vorteilhafte Ausgestaltung des zuvor erläuterten Systems, wie es im Zusammenhang mit Fig. 10 erörtert wurde, zeichnet sich vorzugsweise dadurch aus, dass die Kompaktierungsvorrichtung 16 des Trolleys 2 einen in Fluidverbindung mit dem zweiten Deckelkanal 54 ausgebildeten, zweiten Koppelanschluss 102 aufweist, wobei das Kabinenmonument 88 einen zweiten Koppelgegenanschluss 104 aufweist, der mit dem zweiten Koppelanschluss 102 lösbar koppelbar ausgebildet ist, um eine Fluidverbindung zwischen dem zweiten Koppelanschluss 102 und dem zweiten Koppelgegenanschluss 104 herzustellen, so dass Luft aus dem Faltenbalginnenraum 24 mittels des zweiten Koppelgegenanschlusses 104 absaugbar ist. Wie zuvor im Zusammenhang mit dem ersten Koppelanschluss 92 und dem ersten Koppelgegenanschluss 94 erörtert, ist es bevorzugt vorgesehen, dass die Kopplung zwischen dem zweiten Koppelanschluss 102 und dem zweiten Koppelgegenanschluss 104 hergestellt wird, wenn der Trolley in den Aufnahmeraum 90 platziert bzw. geschoben wird. Der zweite Koppelgegenanschluss 104 kann in analoger Weise zu dem ersten Koppelgegenanschluss 94 zumindest indirekt mit der Vakuumquelle 96 verbunden sein. Durch diese Ausgestaltung ist es möglich, dass das Vakuum der Vakuumquelle 96 zunächst an den ersten Koppelanschluss 94 angelegt wird, um den Faltenbalg 22 aus der zusammengefalteten Stellung in die ausgefaltete Stellung zu bewegen, um das Abfallbehältnis 12 bzw. den darin befindlichen Abfall, zu kompaktieren, und um daraufhin anstatt den ersten Koppelanschluss 94 nunmehr den zweiten Koppelanschluss 102 zumindest indirekt mit der Vakuumquelle 96 zu verbinden, um den Faltenbalg 22 aus der ausgefalteten Stellung wieder zurück in die zusammengefaltete Stellung zu bewegen.

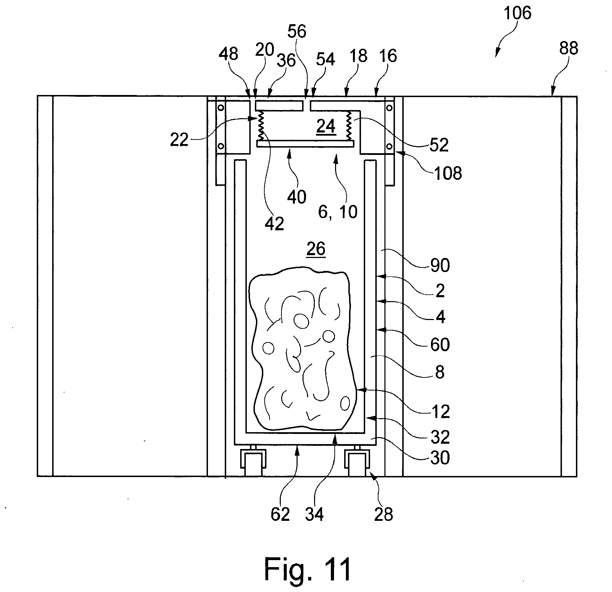

In der Fig. 11 ist ein weiteres, nicht beanspruchtes System 106 dargestellt. Das System 106 ist jedoch keine vorteilhafte Ausgestaltung des Systems, wie es zuvor im Zusammenhang mit der Fig. 10 erörtert wurde. Das System, wie es in Fig. 11 dargestellt ist, umfasst
einen Trolley 2, wie dieser beispielhaft im Zusammenhang mit den Fig. 1 bis 9 erörtert wurde, wobei die Kompaktierungsvorrichtung 16 dem Trolley 2 jedoch nicht zugeordnet ist bzw. der Trolley 2 die Kompaktierungsvorrichtung 16 nicht aufweist. Deshalb wird für den Trolley 2 des Systems 106 auf die vorangegangenen Erläuterungen zu den Fig. 1 und 9 Bezug genommen, insofern es nicht unmittelbar die Kompaktierungsvorrichtung 16 des Trolleys 2 betrifft.

Die nachfolgenden Erläuterungen zu dem System beziehen sich deshalb auf das System 106, wie es beispielhaft in Fig. 11 dargestellt ist. Das System 106 weist ein Kabinenmonument 88 auf. Das Kabinenmonument 88 dient als ein Kabinenmonument für ein Fahrzeug, insbesondere Flugzeug. Außerdem ist es vorgesehen, dass das Kabinenmonument 88 eine Kompaktierungsvorrichtung 16 aufweist. Vorzugsweise ist die Kompaktierungsvorrichtung 16 des Systems bzw. des Kabinenmonuments 88 in analoger Weise zu der bereits erläuterten Kompaktierungsvorrichtung 16 des Trolleys 2 ausgestaltet, wie es im Zusammenhang mit den Fig. 1 bis 9 erörtert wurde. Somit ist festzuhalten, dass für das System 106 bzw. das Kabinenmonument 88 vorzugsweise eine entsprechende Kompaktierungsvorrichtung 16 vorgesehen ist, jedoch dass diese nicht dem Trolley 2 selbst, sondern dem Kabinenmonument 88 zugeordnet ist.

Das Kabinenmonument 88 weist außerdem einen Aufnahmeraum 90 für den Trolley 2 auf, in dem der Trolley 2 angeordnet werden kann. Dazu kann der Trolley 2 in den Aufnahmeraum 90 platziert und/oder geschoben werden. Darüber hinaus ist die Kompaktierungsvorrichtung 16 des Kabinenmonuments 88 derart besonders ausgestaltet, dass der Deckel 18 mit dem Faltenbalg 22 in Richtung des Trolleys 2 verfahrbar ist, wenn der Trolley 2 in dem Aufnahmeraum 90 platziert ist, so dass der Deckel 18 - wie bereits zu den Fig. 1 bis 9 erörtert - zumindest indirekt derart mit dem Behälter 8 in Verbindung gebracht wird, so dass der Faltenbalg 22 einem Behälterinnenraum 26 des Behälters 8 zugewandt ist und dass der Deckel 18 den Behälterinnenraum 26 bis auf den ersten Deckelkanal 20 fluiddicht abschließt, so dass Fluid mittels des ersten Deckelkanals 20 aus dem Behälterinnenraum 26 absaugbar ist.

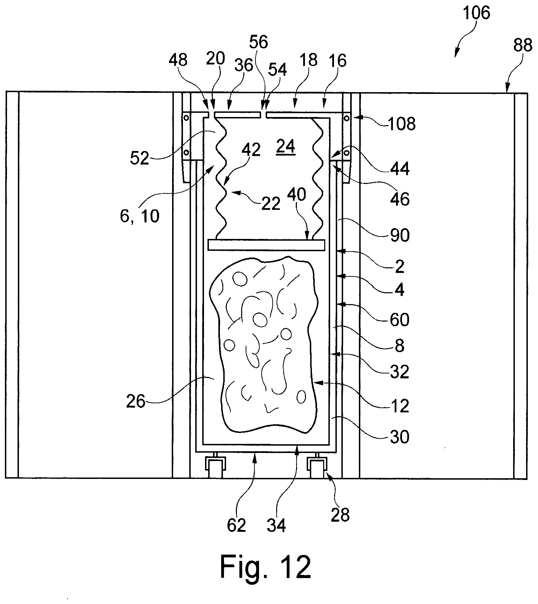

Das System 106 unterscheidet sich also insbesondere dadurch, dass die Kompaktierungsvorrichtung 16 von dem Trolley 2 getrennt ist und nunmehr in dem Kabinenmonument 88 angeordnet ist. Dennoch können die gleichen Funktionen und/oder Effekte erreicht werden, da der Deckel 18 mit dem Faltenbalg 22 in Richtung des Trolleygehäuses 4 bzw. des Behälters 8 verfahrbar ist. Hierzu kann das Kabinenmonument 88 eine Linearführung 108 aufweisen, mittels der die Kompaktierungsvorrichtung 16 und/oder der Deckel 18 verfahrbar ist. Mittels der Linearführung 108 kann also der Deckel 18 aus einer ersten Stellung, in der der Deckel 18 von dem Trolleygehäuse beabstandet ist, wie es beispielhaft in Fig. 11 dargestellt ist, in eine zweite Stellung, wie sie beispielhaft in Fig. 12 dargestellt ist, verfahren werden, bei der der Deckel 18 zumindest indirekt mit dem Behälter 8 in Verbindung gebracht wird, so dass der Deckel 18 den Behälterinnenraum 26 bis auf den ersten Deckelkanal 20 luftdicht abschließt. Sodann kann die Kompaktierung und/oder die weiteren, vorteilhaften Abläufe und/oder Effekte erreicht werden, wie sie im Zusammenhang mit dem Trolley 2 zu den Fig. 1 bis 9 erläutert worden sind.

Das im Zusammenhang mit den Fig. 11 und 12 erläuterte System 106 bietet den Vorteil, dass der Trolley 2 besonders kompakt und/oder besonders leicht und deshalb auch besonders handhabbar ausgestaltet sein kann. Denn beim Einsammeln von Abfall kann der Trolley 2 frei von der Kompaktierungsvorrichtung 16 bewegt werden. Erst zum Kompaktieren des eingesammelten Abfalls kann der Trolley 2 in dem Aufnahmeraum 90 des Kabinenmonuments 88 geschoben werden, um die entsprechende Kompaktierung auszuführen.

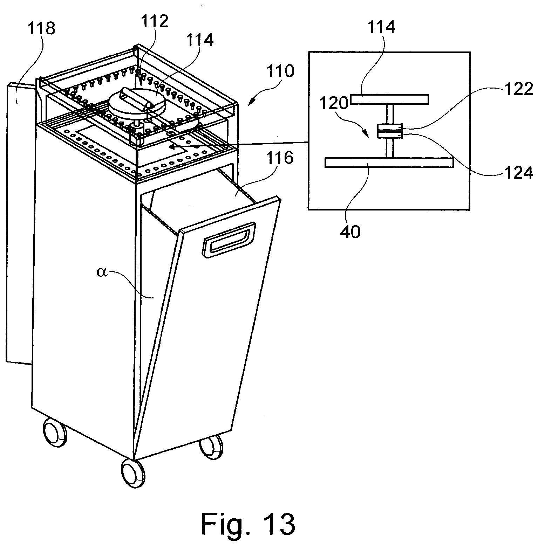

Fig. 13 zeigt einen Trolley 110 mit einer darin integrierten Kompaktierungsvorrichtung 16. Der Trolley 110 besitzt eine Wartungsöffnung 112, die durch eine Wartungsklappe 114 luftdicht verschließbar ist. Die Wartungsklappe 114 kann im Falle einer Fehlfunktion der Kompaktierungsvorrichtung 16 geöffnet werden, um beispielsweise die stirnseitige Wandung 40 des Faltenbalgs 22 in eine obere Position zu ziehen. Hierzu kann die Wandung 40 (hier nicht gezeigt) einen durch die Wartungsöffnung 112 erreichbaren Griff (nicht gezeigt) besitzen. Es versteht sich, dass die Wartungsöffnung 112 derart dimensioniert sein sollte, dass ein Benutzer seinen Arm dort hinein stecken kann.

Der Trolley 110 weist überdies eine beispielhaft an ihrem unteren Ende schwenkbar gelagerte vordere Tür 116 auf, die durch Verschwenken in eine geöffnete Position das Einfüllen von Abfällen in einen Innenbehälter (nicht gezeigt) des Trolleys 110 erlaubt. Es bietet sich an, einen Öffnungswinkel α zwischen einer vertikalen und einer geöffneten Position der vorderen Tür 116 auf 10° bis 15° zu begrenzen.

Zum Auswechseln eines Abfallbehältnisses 12 kann eine hintere Tür 118 vorgesehen sein, die um eine vertikale Achse verschwenkbar an dem Trolleygehäuse angeordnet ist.

In einem schematischen Seitenschnitt wird der Wartungsdeckel 114 gezeigt, an dem eine Haltevorrichtung 120 angeordnet ist. Beispielhaft weist diese einen Magneten 122 und eine Halteplatte 124 auf, die von dem Magneten 122 angezogen wird. Bei in oberer Position beefindlicher stirnseitiger Wandung 40 des Faltenbalgs 22 wird die Wandung 40 von dem Magneten 122 folglich gehalten und löst sich erst, wenn eine durch den Magneten 122 bestimmte Grenzkraft auf die Wandung 40 einwirkt.

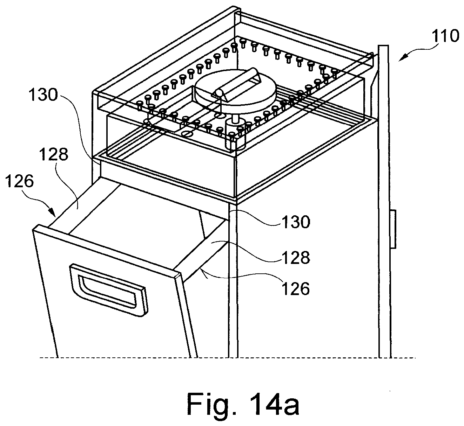

Fig. 14a zeigt eine Detaildarstellung der vorderen Tür 116, die an lateral außenliegenden, oberen Begrenzungskanten 126 Führungsschienen 128 oder Führungsschienensegmente aufweist, die in korrespondierend geformte Schlitze 130 des Trolleygehäuses eingreifen. Durch Anschrägen der Führungsschienen 128 kann das Bereitstellen einer Auflagekante für die stirnseitige Wandung 40 des Faltenbalgs 22 verhindert werden und gleichzeitig eine präzise Führung und Zentrierung der vorderen Tür 116 erreicht werden, wodurch insgesamt ein in dem Trolley 110 befindliches Abfallbehältnis geschützt werden kann.

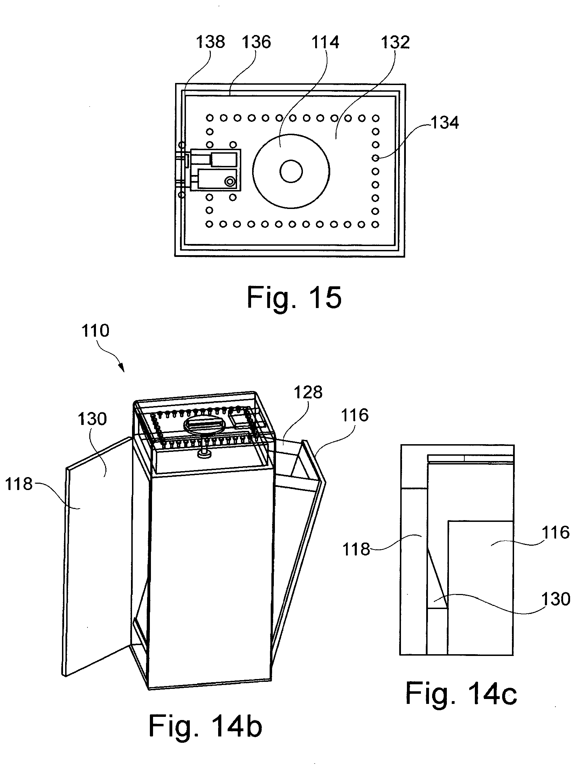

Gleichermaßen zeigen Fig. 14b und 14c weitere Ansichten des Trolleys 110. Die hintere Tür 118 kann eine weitere Führungsschiene 130 bzw. ein Führungsschienensegment aufweisen, welches analog zu den Führungsschienen 128 der vorderen Tür 116 angeschrägt gestaltet ist. Hierdurch kann, wie in Fig. 14c ersichtlich, eine Auflagekante verhindert werden und die geschlossene Position der vorderen Tür 116 vorgegeben werden.

Schließlich zeigt Fig. 15 einen Deckel 132 des Trolleys 110, in dem mehrere Öffnungen 134 angeordnet sind, über den der Faltenbalginnenraum mit der Umgebung in Fluidverbindung steht. Diese Öffnungen 134 können den zweiten Deckelkanal ersetzen oder diesen ausbilden.

Ein Verbindungskanal 136, der mehrere zusätzliche, in den Behälterinnenraum des Trolley 110 gerichtete Öffnungen 138 verbindet, kann weiterhin direkt in den Deckel 132 integriert sein und den ersten Deckelkanal ausbilden oder damit verbunden sein.

## Patentansprüche

1. System (86, 106) zum Kompaktieren von Abfall, aufweisend einen Trolley (2, 110) zum Einsammeln von Abfall, und ein Kabinenmonument (88) für ein Fahrzeug,
wobei der Trolley (2, 110) eine Kompaktierungsvorrichtung (16) mit einem Deckel (18, 132), der einen ersten Deckelkanal und einen zweiten Deckelkanal (54) besitzt, aufweist,
der Trolley (2, 110) aufweisend:
- ein Trolleygehäuse (4) mit einer oberseitigen Gehäuseöffnung (6),
- einen Behälter mit einer Behälteröffnung (10), der in das Trolleygehäuse (4) eingesetzt ist und/oder von dem Trolleygehäuse (4) zumindest teilweise gebildet ist, und
- ein in dem Behälter (8) angeordnetes, auswechselbares Abfallbehältnis (12) mit einer oberseitigen Behältnisöffnung (14), wobei die Behältnisöffnung (14) und die Behälteröffnung (10), sowie gegebenenfalls die Gehäuseöffnung (6), zum Sammeln von Abfall derart zueinander angeordnet sind, dass Abfall in einen Behältnisinnenraum des Abfallbehältnises (12) beförderbar ist,
wobei die Kompaktierungsvorrichtung (16) einen unterseitig an dem Deckel (18, 132) angeordneten Faltenbalg (22) aufweist, der zumindest zwischen einer zusammengefalteten Stellung, in der ein Faltenbalginnenraum (24) des Faltenbalgs (22) ein erstes Volumen aufweist, und einer ausgefalteten Stellung, in der der Faltenbalginnenraum (24) ein gegenüber dem ersten Volumen vergrößertes zweites Volumen aufweist, bewegbar ausgebildet ist,
wobei der Deckel (18, 132) zumindest indirekt derart mit dem Behälter (8) in Verbindung bringbar ist, dass der Faltenbalg (22) einem Behälterinnenraum (26) des Behälters (8) zugewandt ist und der Deckel (18, 132) den Behälterinnenraum (26) bis auf den ersten Deckelkanal (20) luftdicht abschließt, so dass Fluid mittels des ersten Deckelkanals (20) aus dem Behälterinnenraum (26) absaugbar ist,
wobei der zweite Deckelkanal (54) in Fluidverbindung mit dem Faltenbalginnenraum (24) ausgebildet ist,
wobei der Faltenbalg (22) durch ein Absaugen von Fluid aus dem Behälterinnenraum (26) mittels des ersten Deckelkanals (20) in die ausgefaltete Stellung bewegbar ist, so dass der Faltenbalg (22) derart weit in den Behälterinnenraum (26) ragt, dass das Abfallbehältnis (12) und/oder Abfall in dem Abfallbehältnis (12) kompaktiert wird,
wobei die Kompaktierungsvorrichtung (16) in dem Trolley (2, 110) angeordnet ist und einen in Fluidverbindung mit dem ersten Deckelkanal (20) ausgebildeten, ersten Koppelanschluss (92) aufweist,
wobei das Kabinenmonument (88) einen ersten Koppelgegenanschluss (94) aufweist, der mit dem ersten Koppelanschluss (92) lösbar koppelbar ausgebildet ist, um eine Fluidverbindung zwischen ersten Koppelanschluss (92) und dem ersten Koppelgegenanschluss (94) herzustellen, so dass Fluid aus dem Behälterinnenraum (26) mittels des ersten Koppelgegenanschlusses (94) absaugbar ist, und
wobei die Kompaktierungsvorrichtung (16) des Trolleys (2, 110) einen in Fluidverbindung mit dem zweiten Deckelkanal (54) ausgebildeten, zweiten Koppelanschluss (102) aufweist, wobei das Kabinenmonument (88) einen zweiten Koppelgegenanschluss (104) aufweist, der mit dem zweiten Koppelanschluss (102) lösbar koppelbar ausgebildet ist, um eine Fluidverbindung zwischen dem zweiten Koppelanschuss (102) und dem zweiten Koppelgegenanschluss (104) herzustellen, so dass Luft aus dem Faltenbalginnenraum (24) mittels des zweiten Koppelgegenanschlusses (104) absaugbar ist.

2. System (86, 106) nach dem vorhergehenden Anspruch, **dadurch gekennzeichnet, dass** sich der erste Deckelkanal (20) von einer ersten Öffnung (48) an einer Deckeloberseite (36) des Deckels (18, 132) zu einer zweiten Öffnung (50) an einer Deckelunterseite des Deckels (18, 132) erstreckt, wobei die zweite Öffnung (50) des ersten Deckelkanals (20) radial außenseitig zu dem Faltenbalg (22) angeordnet ist.

3. System (86, 106) nach einem der vorhergehenden Ansprüche, **dadurch gekennzeichnet, dass** die Kompaktierungsvorrichtung (16) abnehmbar ausgebildet ist und/oder lösbar an dem Trolleygehäuse (4) befestigt ist.

4. System (86, 106) nach einem der vorhergehenden Ansprüche, **dadurch gekennzeichnet, dass** der Deckel (18, 132) und ein behälteröffnungsseitiger Rand des Behälters (8) derart ausgebildet sind, so dass eine luftdichte Dichtung entsteht, wenn der Deckel (18, 132) auf den Rand des Behälters (8) aufgesetzt wird.

5. System (86, 106) einem der vorhergehenden Ansprüche, **dadurch gekennzeichnet, dass** eine von dem Deckel (18, 132) abgewandte, erste stirnseitige Wandung (40) des Faltenbalgs (22) starr ausgebildet ist.

6. System (86, 106) nach dem vorhergehenden Anspruch, **dadurch gekennzeichnet, dass** eine starre Verstärkungsplatte an der ersten stirnseitigen Wandung (40) des Faltenbalgs (22) angeordnet und/oder ausgebildet ist, um den Faltenbalg (22) an der ersten stirnseitigen Wandung (40) starr auszubilden.

7. System (86, 106) nach einem der vorhergehenden Ansprüche 2 bis 6, **dadurch gekennzeichnet, dass** der Behälterinnenraum (26) durch eine Trennwand (70) in eine Flüssigkeitskammer (72) und eine Feststoffkammer (74), in der das Abfallbehältnis (12) angeordnet ist, unterteilt ist, die sich jeweils bis zu der Behälteröffnung (10) erstrecken, so dass durch ein Flüssigkeitskammeröffnungsbereich (76) der Behälteröffnung (10) Flüssigkeit in die Flüssigkeitskammer (72) beförderbar ist und dass durch einen Feststoffkammeröffnungsbereich (78) der Behälteröffnung (10) Feststoff in die Feststoffkammer (74) bzw. das Abfallbehältnis (12) beförderbar ist, wobei die Trennwand (70) eine Ausnehmung in einem behälteröffnungsseitigen Endabschnitt aufweist, durch die Gas, insbesondere Luft, aus der Feststoffkammer (74) in die Flüssigkeitskammer (72) strömen kann, wobei der Behälter (8) eine Absaugleitung (80) aufweist, die sich von einer behälteröffnungsseitigen, ersten Leitungsöffnung (82) bis zu einer zweiten Leitungsöffnung (84) in einem bodenseitigen Bereich der Flüssigkeitskammer (72) erstreckt, und wobei die erste Leitungsöffnung (82) der Absaugleitung (80) und die zweite Öffnung (50) des ersten Deckelkanals (20) derart angeordnet sind, dass die zweite Öffnung (50) des ersten Deckelkanals (20) fluiddicht auf der ersten Leitungsöffnung (82) zumindest indirekt aufliegt, wenn der Deckel (18, 132) mit dem Behälter (8) in Verbindung gebracht ist, so dass eine Fluidverbindung zwischen dem ersten Deckelkanal (20) und der Absaugleitung (80) entsteht.

8. System (86, 106) nach einem der vorhergehenden Ansprüche, **dadurch gekennzeichnet, dass** das Kabinenmonument (88) ein steuerbares Mehrwegeventil aufweist, ein erster Eingang des Mehrwegeventils zumindest indirekt mit einer Vakuumquelle koppelbar ist, ein erster Ausgang des Mehrwegeventils in Fluidverbindung mit dem ersten Deckelkanal (20) oder dem ersten Koppelgegenanschluss (94) ausgebildet ist, ein zweiter Ausgang des Mehrwegeventils in Fluidverbindung mit dem zweiten Deckelkanal (54) oder dem zweiten Koppelgegenanschluss (104) ausgebildet ist, und das Mehrwegeventil derart steuerbar ist, um Fluid mittels der Vakuumquelle entweder aus dem Faltenbalginnenraum (24) oder dem Behälterinnenraum (26) abzusaugen, so dass der Faltenbalg (22) zwischen der zusammengefalteten Stellung und der ausgefalteten Stellung, oder umgekehrt, bewegt wird.

9. System (86, 106) nach dem vorhergehenden Anspruch, **dadurch gekennzeichnet, dass** das Mehrwegeventil einen zweiten Eingang aufweist, der zumindest indirekt mit einer Umgebungsluft gekoppelt ist, wobei das Mehrwegeventil zumindest derart steuerbar ist, so dass der erste Eingang mit dem ersten Ausgang und der zweite Eingang mit dem zweiten Ausgang gekoppelt ist, oder so dass der erste Eingang mit dem zweiten Ausgang und der zweite Eingang mit dem ersten Ausgang gekoppelt ist.

10. System nach Anspruch 3, wobei die Kompaktierungsvorrichtung (16) eine Haltevorrichtung (120) aufweist, mit dem die stirnseitige Wandung (40) des Faltenbags (22) in Verbindung bringbar ist, um die stirnseitige Wandung in der oberen Position zu haltern, bis beim Einleiten einer Kompaktierung eine Mindestkraft auf die stirnseitige Wandung (40) wirkt und diese aus der Haltevorrichtung (120) löst.

11. Fahrzeug, insbesondere Flugzeug, aufweisend mindestens ein System (86, 106) nach einem der vorhergehenden Ansprüche.

## Claims

1. System (86, 106) for compacting waste, having a trolley (2, 110) for collecting waste, and having a cabin monument (88) for a vehicle,
the trolley (2, 110) having a compacting device (16) with a lid (18, 132) which has a first lid channel and a second lid channel (54),
the trolley (2, 110) having:
- a trolley housing (4) with a top-side housing opening (6),
- a container with a container opening (10), which container is inserted into the trolley housing (4) and/or is at least partially formed by the trolley housing (4), and
- an exchangeable waste receptacle (12) which is arranged in the container (8) and which has a top-side receptacle opening (14), the receptacle opening (14) and the container opening (10), and possibly the housing opening (6), being, for the collecting of waste, arranged relative to one another such that waste can be conveyed into a receptacle interior space of the waste receptacle (12),
the compacting device (16) having a gaiter (22) which is arranged at the bottom side on the lid (18, 132) and which is designed to be movable at least between a folded-together position, in which a gaiter interior space (24) of the gaiter (22) has a first volume, and a folded-out position, in which the gaiter interior space (24) has a second volume which is larger than the first volume, it being possible for the lid (18, 132) to be at least indirectly placed in connection with the container (8) such that the gaiter (22) faces toward a container interior space (26) of the container (8) and the lid (18, 132) closes off the container interior space (26) in air-tight fashion aside from the first lid channel (20), such that fluid can be suctioned out of the container interior space (26) via the first lid channel (20), and
the second lid channel (54) being configured in fluidic connection with the gaiter interior space (24),
the gaiter (22) being movable into the folded-out position by suctioning of fluid out of the container interior space (26) via the first lid channel (20), such that the gaiter (22) projects into the container interior space (26) to such an extent that the waste receptacle (12) and/or waste in the waste receptacle (12) are/is compacted,
the compacting device (16) being arranged in the trolley (2, 110) and having a first coupling connector (92) which is configured to be in fluidic connection with the first lid channel (20), and
the cabin monument (88) having a first coupling counterpart connector (94) which is configured to be detachably couplable to the first coupling connector (92) in order to produce a fluidic connection between the first coupling connector (92) and the first coupling counterpart connector (94), such that fluid can be suctioned out of the container interior space (26) via the first coupling counterpart connector (94), and
the compacting device (16) of the trolley (2, 110) having a second coupling connector (102) which is configured to be in fluidic connection with the second lid channel (54), the cabin monument (88) having a second coupling counterpart connector (104) which is configured to be detachably couplable to the second coupling connector (102) in order to produce a fluidic connection between the second coupling connector (102) and the second coupling counterpart connector (104), such that air can be suctioned out of the gaiter interior space (24) via the second coupling counterpart connector (104).

2. System (86, 106) according to the preceding claim, **characterized in that** the first lid channel (20) extends from a first opening (48) at a lid top side (36) of the lid (18, 132) to a second opening (50) at a lid bottom side of the lid (18, 132), the second opening (50) of the first lid channel (20) being arranged radially to the outside of the gaiter (22).

3. System (86, 106) according to either of the preceding claims, **characterized in that** the compacting device (16) is configured to be removable and/or is detachably fastened to the trolley housing (4).

4. System (86, 106) according to one of the preceding claims, **characterized in that** the lid (18, 132) and a container-opening-side edge of the container (8) are configured such that an air-tight seal is formed when the lid (18, 132) is mounted onto the edge of the container (8) .

5. System (86, 106) according to one of the preceding claims, **characterized in that** a first end-side wall (40), averted from the lid (18, 132), of the gaiter (22) is of rigid configuration.

6. System (86, 106) according to the preceding claim, **characterized in that** a rigid reinforcement plate is arranged and/or configured on the first end-side wall (40) of the gaiter (22) in order to make the gaiter (22) of rigid configuration at the first end-side wall (40).

7. System (86, 106) according to one of the preceding Claims 2 to 6, **characterized in that** the container interior space (26) is divided by means of a partition (70) into a liquids chamber (72) and a solids chamber (74) in which the waste receptacle (12) is arranged, which chambers each extend as far as the container opening (10) such that liquid can be conveyed into the liquids chamber (72) through a liquids chamber opening region (76) of the container opening (10) and that solids can be conveyed into the solids chamber (74) or the waste receptacle (12) through a solids chamber opening region (78) of the container opening (10), the partition (70) having a recess in a container-opening-side end section, through which recess gas, in particular air, can flow out of the solids chamber (74) into the liquids chamber (72), the container (8) having a suction line (80) which extends from a container-opening-side first line opening (82) to a second line opening (84) in a base-side region of the liquids chamber (72), and the first line opening (82) of the suction line (80) and the second opening (50) of the first lid channel (20) are arranged such that the second opening (50) of the first lid channel (20) lies at least indirectly in fluid-tight fashion on the first line opening (82) when the lid (18, 132) is placed in connection with the container (8), such that a fluidic connection is formed between the first lid channel (20) and the suction line (80).

8. System (86, 106) according to one of the preceding claims, **characterized in that** the cabin monument (88) has a controllable multi-way valve, a first inlet of the multi-way valve is at least indirectly couplable to a vacuum source, a first outlet of the multi-way valve is configured to be in fluidic connection with the first lid channel (20) or with the first coupling counterpart connector (94), a second outlet of the multi-way valve is configured to be in fluidic connection with the second lid channel (54) or with the second coupling counterpart connector (104), and the multi-way valve is controllable so as to suction fluid out of either the gaiter interior space (24) or the container interior space (26) by means of the vacuum source, such that the gaiter (22) is moved between the folded-together position and the folded-out position, or vice versa.

9. System (86, 106) according to the preceding claim, **characterized in that** the multi-way valve has a second inlet which is at least indirectly coupled to ambient air, the multi-way valve being at least controllable such that the first inlet is coupled to the first outlet and the second inlet is coupled to the second outlet, or such that the first inlet is coupled to the second outlet and the second inlet is coupled to the first outlet.

10. System according to Claim 3, the compacting device (16) having a holding device (120) with which the end-side wall (40) of the gaiter (22) can be placed in connection in order to hold the end-side wall in the upper position until, during the initiation of a compacting operation, a minimum force acts on the end-side wall (40) and releases the latter from the holding device (120).

11. Vehicle, in particular aircraft, having at least one system (86, 106) according to one of the preceding claims.

## Revendications

1. Système (86, 106) pour compacter des déchets, présentant un chariot (2, 110) pour collecter des déchets, et un monument de cabine (88) pour un véhicule,
le chariot (2, 110) présentant un dispositif de compactage (16) avec un couvercle (18, 132) qui possède un premier canal de couvercle et un deuxième canal de couvercle (54),
le chariot (2, 110) présentant :
- un boîtier de chariot (4) avec une ouverture de boîtier sur le côté supérieur (6),
- un conteneur avec une ouverture de conteneur (10), qui est inséré dans le boîtier de chariot (4) et/ou est formé au moins partiellement par le boîtier de chariot (4), et
- un récipient à déchets (12) interchangeable, agencé dans le conteneur (8), avec une ouverture de récipient (14) sur le côté supérieur, l'ouverture de récipient (14) et l'ouverture de conteneur (10), ainsi que, le cas échéant, l'ouverture de boîtier (6), étant agencées les unes par rapport aux autres pour collecter des déchets, de telle sorte que des déchets peuvent être transportés dans un espace intérieur de récipient du récipient à déchets (12),
le dispositif de compactage (16) présentant un soufflet (22) agencé sur le côté inférieur du couvercle (18, 132), qui est réalisé mobile au moins entre une position repliée, dans laquelle un espace intérieur de soufflet (24) du soufflet (22) présente un premier volume, et une position dépliée, dans laquelle l'espace intérieur de soufflet (24) présente un deuxième volume agrandi par rapport au premier volume,
le couvercle (18, 132) pouvant être mis en liaison au moins indirectement avec le conteneur (8) de telle sorte que le soufflet (22) soit tourné vers un espace intérieur de conteneur (26) du conteneur (8) et que le couvercle (18, 132) ferme l'espace intérieur de conteneur (26) de manière étanche à l'air à l'exception du premier canal de couvercle (20), de telle sorte que du fluide peut être aspiré depuis l'espace intérieur de conteneur (26) au moyen du premier canal de couvercle (20),
le deuxième canal de couvercle (54) étant réalisé en communication fluidique avec l'espace intérieur de soufflet (24),
le soufflet (22) pouvant être déplacé dans la position dépliée par une aspiration de fluide depuis l'espace intérieur de conteneur (26) au moyen du premier canal de couvercle (20), de telle sorte que le soufflet (22) fait saillie dans l'espace intérieur de conteneur (26) sur une distance telle que le récipient à déchets (12) et/ou les déchets dans le récipient à déchets (12) sont compactés, le dispositif de compactage (16) étant agencé dans le chariot (2, 110) et présentant un premier raccord de couplage (92) réalisé en communication fluidique avec le premier canal de couvercle (20),
le monument de cabine (88) présentant un premier contre-raccord de couplage (94), qui est réalisé pour pouvoir être couplé de manière amovible au premier raccord de couplage (92) afin d'établir une communication fluidique entre le premier raccord de couplage (92) et le premier contre-raccord de couplage (94), de telle sorte que du fluide peut être aspiré depuis l'espace intérieur de conteneur (26) au moyen du premier contre-raccord de couplage (94), et
le dispositif de compactage (16) du chariot (2, 110) présentant un deuxième raccord de couplage (102) réalisé en communication fluidique avec le deuxième canal de couvercle (54), le monument de cabine (88) présentant un deuxième contre-raccord de couplage (104), qui est réalisé de manière à pouvoir être couplé de manière amovible au deuxième raccord de couplage (102) afin d'établir une communication fluidique entre le deuxième raccord de couplage (102) et le deuxième contre-raccord de couplage (104), de telle sorte que de l'air peut être aspiré depuis l'espace intérieur de soufflet (24) au moyen du deuxième contre-raccord de couplage (104).

2. Système (86, 106) selon la revendication précédente, **caractérisé en ce que** le premier canal de couvercle (20) s'étend d'une première ouverture (48) sur un côté supérieur de couvercle (36) du couvercle (18, 132) à une deuxième ouverture (50) sur un côté inférieur de couvercle du couvercle (18, 132), la deuxième ouverture (50) du premier canal de couvercle (20) étant agencée radialement sur le côté extérieur du soufflet (22).

3. Système (86, 106) selon l'une quelconque des revendications précédentes, **caractérisé en ce que** le dispositif de compactage (16) est réalisé sous forme retirable et/ou est fixé de manière amovible sur le boîtier de chariot (4).

4. Système (86, 106) selon l'une quelconque des revendications précédentes, **caractérisé en ce que** le couvercle (18, 132) et un bord du conteneur (8) du côté de l'ouverture de conteneur sont réalisés de telle sorte qu'un joint étanche à l'air est créé lorsque le couvercle (18, 132) est placé sur le bord du conteneur (8).

5. Système (86, 106) selon l'une des revendications précédentes, **caractérisé en ce qu'**une première paroi frontale (40) du soufflet (22), détournée du couvercle (18, 132), est réalisée sous forme rigide.

6. Système (86, 106) selon la revendication précédente, **caractérisé en ce qu'**une plaque de renforcement rigide est agencée et/ou réalisée sur la première paroi frontale (40) du soufflet (22) afin de réaliser le soufflet (22) sous forme rigide sur la première paroi frontale (40).

7. Système (86, 106) selon l'une quelconque des revendications 2 à 6 précédentes, **caractérisé en ce que** l'espace intérieur de conteneur (26) est divisé par une paroi de séparation (70) en une chambre à liquide (72) et une chambre à solide (74) dans laquelle le récipient à déchets (12) est agencé, qui s'étendent respectivement jusqu'à l'ouverture de conteneur (10), de telle sorte que du liquide peut être transporté dans la chambre à liquide (72) à travers une zone d'ouverture de chambre à liquide (76) de l'ouverture de conteneur (10) et que du solide peut être transporté dans la chambre à solide (74) ou le récipient à déchets (12) à travers une zone d'ouverture de chambre à solide (78) de l'ouverture de conteneur (10), la paroi de séparation (70) présentant un évidement dans une section d'extrémité du côté de l'ouverture de conteneur, à travers lequel du gaz, notamment de l'air, peut s'écouler de la chambre à solide (74) dans la chambre à liquide (72), le conteneur (8) présentant une conduite d'aspiration (80) qui s'étend d'une première ouverture de conduite (82) du côté de l'ouverture de conteneur jusqu'à une deuxième ouverture de conduite (84) dans une zone du côté du fond de la chambre à liquide (72), et la première ouverture de conduite (82) de la conduite d'aspiration (80) et la deuxième ouverture (50) du premier canal de couvercle (20) étant agencées de telle sorte que la deuxième ouverture (50) du premier canal de couvercle (20) repose de manière étanche aux fluides sur la première ouverture de conduite (82), au moins indirectement, lorsque le couvercle (18, 132) est mis en liaison avec le conteneur (8), de telle sorte qu'une communication fluidique est établie entre le premier canal de couvercle (20) et la conduite d'aspiration (80).

8. Système (86, 106) selon l'une quelconque des revendications précédentes, **caractérisé en ce que** le monument de cabine (88) présente une soupape à plusieurs voies pouvant être commandée, une première entrée de la soupape à plusieurs voies pouvant être couplée au moins indirectement à une source de vide, une première sortie de la soupape à plusieurs voies étant réalisée en communication fluidique avec le premier canal de couvercle (20) ou le premier contre-raccord de couplage (94), une deuxième sortie de la soupape à plusieurs voies étant réalisée en communication fluidique avec le deuxième canal de couvercle (54) ou le deuxième contre-raccord de couplage (104), et la soupape à plusieurs voies pouvant être commandée de manière à aspirer du fluide au moyen de la source de vide soit depuis l'espace intérieur de soufflet (24), soit depuis l'espace intérieur de conteneur (26), de telle sorte que le soufflet (22) est déplacé entre la position repliée et la position dépliée, ou inversement.

9. Système (86, 106) selon la revendication précédente, **caractérisé en ce que** la soupape à plusieurs voies présente une deuxième entrée couplée au moins indirectement à un air ambiant, la soupape à plusieurs voies pouvant être commandée au moins de telle sorte que la première entrée soit couplée à la première sortie et la deuxième entrée à la deuxième sortie, ou de telle sorte que la première entrée soit couplée à la deuxième sortie et la deuxième entrée à la première sortie.

10. Système selon la revendication 3, dans lequel le dispositif de compactage (16) présente un dispositif de retenue (120) avec lequel la paroi frontale (40) du soufflet (22) peut être mise en liaison pour retenir la paroi frontale dans la position supérieure jusqu'à ce que, lors du déclenchement d'un compactage, une force minimale agisse sur la paroi frontale (40) et libère celle-ci du dispositif de retenue (120).

11. Véhicule, notamment aéronef, présentant au moins un système (86, 106) selon l'une quelconque des revendications précédentes.
